(19) Europäisches Patentamt / European Patent Office / Office européen des brevets

(11) **EP 3 513 901 B1**

(12) **EUROPEAN PATENT SPECIFICATION**

(45) Date of publication and mention of the grant of the patent:
**12.01.2022 Bulletin 2022/02**

(21) Application number: **17850726.5**

(22) Date of filing: **04.09.2017**

(51) Int Cl.:
**B23K 35/30** (2006.01)　　　**B23K 35/362** (2006.01)
**B23K 35/368** (2006.01)　　　**C22C 38/00** (2006.01)
**C22C 38/08** (2006.01)　　　**B23K 35/02** (2006.01)
**B23K 35/36** (2006.01)　　　**C22C 38/06** (2006.01)
**C22C 38/12** (2006.01)　　　**C22C 38/16** (2006.01)
**C22C 38/40** (2006.01)　　　**C22C 38/42** (2006.01)
**C22C 38/44** (2006.01)　　　**C22C 38/46** (2006.01)
**C22C 38/48** (2006.01)

(86) International application number:
**PCT/JP2017/031694**

(87) International publication number:
**WO 2018/051823 (22.03.2018 Gazette 2018/12)**

(54) **WIRE FOR ELECTROSLAG WELDING, FLUX FOR ELECTROSLAG WELDING AND WELDED JOINT**

VORRICHTUNG FÜR STROMLOSES SCHWEISSEN, FLUSSMITTEL FÜR ELEKTROLOSES SCHWEISSEN UND SCHWEISSVERBINDUNG

FIL POUR SOUDAGE ÉLECTRIQUE SOUS LAITIER, FLUX POUR SOUDAGE ÉLECTRIQUE SOUS LAITIER ET JOINT SOUDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.09.2016 JP 2016178802**
**21.02.2017 JP 2017030282**

(43) Date of publication of application:
**24.07.2019 Bulletin 2019/30**

(73) Proprietor: **Kabushiki Kaisha Kobe Seiko Sho (Kobe Steel, Ltd.)**
**Kobe-shi, Hyogo 651-8585 (JP)**

(72) Inventors:
• **ISHIZAKI Keito**
**Kanagawa 251-8551 (JP)**
• **YUAN Yimin**
**Kanagawa 251-8551 (JP)**
• **NAKO Hidenori**
**Kobe-shi**
**Hyogo 651-2271 (JP)**
• **SUGIMURA Tomoko**
**Kobe-shi**
**Hyogo 651-2271 (JP)**
• **OKAZAKI Yoshitomi**
**Kobe-shi**
**Hyogo 651-2271 (JP)**

(74) Representative: **Müller-Boré & Partner Patentanwälte PartG mbB**
**Friedenheimer Brücke 21**
**80639 München (DE)**

(56) References cited:
**JP-A- S5 071 529**　　**JP-A- S5 071 529**
**JP-A- H02 220 795**　**JP-A- H08 267 274**
**JP-A- H11 138 290**　**JP-A- H11 138 290**
**JP-A- S50 113 446**　**JP-A- S55 165 294**
**JP-A- S60 111 793**　**JP-A- 2004 058 142**
**JP-A- 2005 305 471**　**JP-A- 2005 305 471**
**JP-A- 2008 183 570**　**JP-A- 2009 154 199**
**JP-A- 2010 089 100**　**JP-A- 2010 094 686**

**Description**

The present invention relates to a wire for use in electroslag welding of 5-10% Ni steel which is steel for cryogenic service to be applied to a tank for storing liquefied natural gas or the like at a low temperature or a chemical plant using the same gas, flux for use in the same welding, and a method for producing a weld joint using these weld materials.

9% Ni steel has high strength and excellent toughness at an ultralow temperature such as a liquid nitrogen temperature (-196°C). The 9% Ni steel is therefore generally used as a base metal for manufacturing, by welding, storage tanks for storing liquefied natural gas (LNG) and the like at a low temperature. Those storage tanks are required to have excellent cryogenic toughness in a temperature range of -162°C or less, which is a temperature range of liquid such as LNG. Therefore, a weld metal (i.e., weld portion) of a weld joint formed by welding the 9% Ni steel is also required to have similar excellent cryogenic toughness.

In the background art, a welding method such as coated arc welding, submerged arc welding or automatic TIG (Tungsten Inert Gas) welding using a Ni-based weld material has been used for welding of the 9% Ni steel. A weld metal obtained by these welding methods is excellent in cryogenic toughness, but lower in strength than the 9% Ni steel as a base metal. Thus, there is a problem that a design plate thickness for a structure must be increased in accordance with the strength of a Ni-based weld metal portion. On the other hand, iron and steel companies have promoted reduction of Ni amount in steel for cryogenic service, and have researched to put 7% Ni steel or 5% Ni steel into practical use.

Patent Literatures 1 to 4 propose welding solid wires or gas shielded arc welding flux cored wires for steel for cryogenic service. According to each of the present inventions, heat input is about 1.4 to 2.2 kJ/mm with efficiency improved by gas shielded arc welding using pure Ar gas or Ar gas containing 2% or less of oxygen, carbon dioxide gas or He gas, in comparison with TIG welding. However, an operation method with higher efficiency is desired.

JP H11-138290 A describes a welding method and a welding material. JP S50-071529 A describes an electroslag welding method for cast iron and a welding material used therefor. JP S60-111793 A describes a flux for electroslag build-up welding using a belt-like electrode. JP S55-165294 A describes a flux for horizontal electroslag build-up welding by a stripform electrode. JP 2008-183570 A describes a flux for electroslag build-up welding.

Patent Literature 1: JP-A-2015-9247
Patent Literature 2: JP-A-2016-20004
Patent Literature 3: JP-A-2016-93823
Patent Literature 4: Japanese Patent No. 5880662

An object of the present invention is to provide a weld joint having a high efficiency, for example, an amount of heat input of 10 kJ/mm or more, and including a weld metal excellent in mechanical properties such as strength and cryogenic properties.

The present inventors researched a high-efficiency welding operation method capable of obtaining predetermined mechanical properties in a weld metal joint using a weld material as claimed to weld a 5 to 10% Ni steel by electroslag welding. As a result, the present inventor et al. found an electroslag welding wire and flux capable of high-efficiency welding with an amount of heat input of 10.0 kJ/mm or more and capable of obtaining predetermined mechanical properties, and a weld metal chemical component system using the wire and the flux.

That is, the electroslag welding wire according to the present invention capable of solving the aforementioned problem is an electroslag welding wire containing, by mass% based on total mass of the wire:

C: more than 0% and 0.07% or less;
Si: more than 0% and 0.50% or less;
Mn: more than 0% and 1.0% or less;
Ni: 6.0 to 15.0%;
Fe: 79% or more, and
optionally at least one element selected from the group consisting of Cu, Cr, Mo, W, Nb, V and B, and satisfying the following relationship (2):

$$0.150 \leq C+Si/30+W/30+Mn/20+Cu/20+Ni/60+Cr/20+Mo/15+Nb/10+V/10+5 \times B \leq 0.300 \quad (2),$$

the electroslag welding wire further optionally containing at least one element selected from the group consisting of Ca, Mg, REM, Zr, Al and Ti and satisfying the following relationship (3):

$$0.001 \leq 1.6(Ca+Mg)+1.25(REM+Zr)+Al+0.8Ti \leq 0.70 \qquad (3),$$

and

optionally, when the wire is a flux cored wire, the flux containing:

a metal-based flux satisfying the aforementioned ranges of the composition; and
a slag forming agent in an amount of more than 0% and not more than 15% based on total mass of the wire,
wherein the slag forming agent contains at least one selected from the group consisting of $SiO_2$, $CaO$, $CaF_2$, $BaF_2$, $MgO$, $Al_2O_3$, $MnO$, $TiO_2$, $ZrO_2$, $FeO$, $Na_2O$, $K_2O$, and $BaO$, and satisfies the following relationship (4):

$$(CaO+CaF_2+BaF_2+MgO+BaO+Na_2O+K_2O)/(SiO_2+0.5(Al_2O_3+TiO_2+ZrO_2+MnO+FeO)) \geq 1.00 \qquad (4)$$

wherein the left side is taken as >100 when the slag forming agent does not contain any of $SiO_2$, $Al_2O_3$, $TiO_2$, $ZrO_2$, $MnO$ and $FeO$,
the remainder of the electroslag welding wire being inevitable impurities.

According to a preferred embodiment of the present invention, the electroslag welding wire is a solid wire or a flux cored wire.

According to a preferred embodiment of the present invention, the wire has been plated with Cu.

According to the present invention, there is further provided the use of a flux additionally put to compensate molten slag which is reduced with the advance of welding during electroslag welding together with any one of the aforementioned electroslag welding wires, the additional flux containing by mass%:

$SiO_2$: 0 to 35%;
$CaO$: 5 to 60%;
$CaF_2$: 3 to 50%;
$BaF_2$: 0 to 20%;
$MgO$: 0 to 20%;
$Al_2O_3$: 0 to 65%;
$MnO$: 0 to 20%;
$TiO_2$: 0 to 10%;
$ZrO_2$: 0 to 10%;
$FeO$: 0 to 5%;
$Na_2O$: 0 to 10%;
$K_2O$: 0 to 10%;
$BaO$: 0 to 20%, and
the remainder being inevitable impurities, and
the flux satisfying the following relationship (5):

$$(CaO+CaF_2+BaF_2+MgO+BaO+Na_2O+K_2O)/(SiO_2+0.5(Al_2O_3+TiO_2+ZrO_2+MnO+FeO)) \geq 1.00 \qquad (5)$$

The left side is taken as > 100 when the slag forming agent does not contain any of $SiO_2$, $Al_2O_3$, $TiO_2$, $ZrO_2$, $MnO$ and $FeO$.

In addition, there is provided a method for producing a weld joint using any one of the aforementioned electroslag welding wires and the flux for electroslag welding having the aforementioned composition, and a steel plate containing 5 to 10% of Ni as a base material,

wherein a weld metal in the weld joint contains, by mass%:

C: more than 0% and 0.07% or less;
Si: more than 0% and 0.50% or less;
Mn: more than 0% and 1.0% or less; and

Ni: 6.0 to 15.0%,

optionally at least one element selected from the group consisting of Cu, Cr, Mo, W, Nb, V and B,
optionally O: 0% or more, and 0.025% or less; and
optionally N: 0% or more, and 0.010% or less,
with the remainder consisting of Fe; Ca, Mg, REM, Al, Zr and Ti partially left behind as slag formed from the slag forming agent; and inevitable impurities, and
wherein the weld metal satisfies the following relationship (7):

$$0.150 \leq C+Si/30+W/30+Mn/20+Cu/20+Ni/60+Cr/20+Mo/15+Nb/10+V/10+5\times B \leq 0.300 \quad (7)$$

According to the present invention, it is possible to provide a weld joint with a weld metal excellent in strength and cryogenic toughness even in high heat input welding, for example, with an amount of heat input of 10 kJ/mm or more.

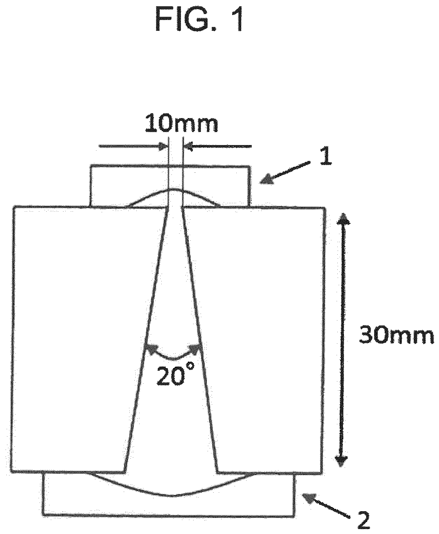

[FIG. 1] FIG. 1 is a view of a schematic configuration of groove welding in Examples.
In order to solve the foregoing problem, the present inventors conducted research through the use of electroslag welding, which had not been examined in the background art, as high heat input welding using a weld material with about 6.0 to 15.0% of Ni. As a result, the present inventors found that a weld joint with a weld metal excellent in strength and cryogenic toughness can be obtained in spite of high heat input welding, for example, with an amount of heat input of 10 kJ/mm or more by using a weld material having components adjusted properly was used. Thus, the present inventors completed the present invention.
Here, the electroslag welding is a method in which a welding wire is put into a molten slag bath so that a base metal and the welding wire are melted mainly using Joule heat of the molten slag as a heat source. By the electroslag welding, vertical welding of a structure having a large plate thickness in a field of shipbuilding, industrial machinery, or the like can be performed in a single pass. The vertical welding of such a structure has been performed by electrogas arc welding in the background art. However, there has been a problem on a working environment for welding workers, such as heat radiated from an arc, fumes, spatter, etc. Further, there is another problem that when the plate thickness increases, shielding may deteriorate to degrade the mechanical performance of a weld portion.
On the other hand, according to the electroslag welding, a wire and a base metal are melted not by an exposed arc as in electrogas arc welding but by heat generated in molten slag. Thus, heat radiated by the arc is not generated, and generation of fumes or spatter is reduced. As a result, the working environment is improved. In addition, a weld metal is shielded from the atmosphere by the molten slag. Thus, shielding gas is not required. Even when the plate thickness increases, there is no fear that the shield effect deteriorates. Regardless of the plate thickness, nitrogen and the like in the atmosphere can be effectively prevented from entering the molten metal. Thus, mechanical deterioration of the weld metal is less likely to occur.
In the present description, the electroslag welding wire is sometimes simply referred to as wire.
The present invention is described below in detail. Here, unless otherwise specifically noted, % denotes mass%. In addition, "-" denotes a range of the lower limit value or more and the upper limit value or less.

(Electroslag Welding Wire)

The electroslag welding wire according to the present invention contains the following components. In the present invention, a flux cored wire is preferably used as will be described later. In this case, each component of the electroslag welding wire is described as percentage by mass of the component contained in the flux cored wire with respect to the total mass of the flux cored wire. The total mass of the flux cored wire is a total of the mass of a hoop and the mass of a flux.

C: more than 0% and 0.07% or less

C is an element which strengthens a solid solution and forms a compound to thereby contribute to securing strength. In order to effectively exert the aforementioned effect, the content of C is preferably 0.003% or more. However, when an excessive amount of C is added, the number of compound particles increases so that the compound particles act as starting points of void formation in a charpy test. Thus, cryogenic toughness deteriorates. Therefore, the content of C is 0.07% or less. The content of C is preferably 0.05% or less.

Si: more than 0% and 0.50% or less

Si is a deoxidizing element, which has an effect of reducing the concentration of oxygen in the weld metal to thereby improve the cryogenic toughness. In order to effectively exert the aforementioned effect, the content of Si is preferably 0.003% or more. However, excessive addition of Si causes excessive increase of strength. Thus, cryogenic toughness deteriorates. Therefore, the content of Si is 0.50% or less. The content of Si is preferably 0.40% or less.

Mn: more than 0% and 1.0% or less

Mn is an element which strengthens a solid solution to thereby contribute to securing strength. When the content of Mn is insufficient, predetermined strength cannot be obtained. Therefore, the content of Mn is preferably 0.01% or more. However, excessive addition of Mn causes excessive increase of strength. Thus, cryogenic toughness deteriorates. Therefore, the content of Mn is 1.0% or less. The content of Mn is preferably 0.9% or less.

Ni: 6.0-15.0%

Ni is an essential element for securing low temperature toughness. The content of Ni is 6.0% or more. The content of Ni is preferably 7.0% or more. However, excessive addition of Ni causes increase of strength. Thus, cryogenic toughness deteriorates. Therefore, the content of Ni is 15.0% or less. The content of Ni is preferably 14.0% or less.

Fe: 79% or more

Fe is a basic component as in the case of a base metal to be joined. In order to secure component continuity of a joint composed of the base metal and the weld metal, the content of Fe is 79% or more. When the content of Fe is less than 79%, it is necessary to add another alloy component or a slag forming agent more than a specified amount. As a result, the strength of the weld metal is excessive so that the cryogenic toughness deteriorates. The content of Fe is preferably 82% or more.

Although the effects of the respective components are described above, there is a case that required mechanical properties are not satisfied even when the contents of the components are within their specified component ranges. Therefore, the present inventors carried out deeper researches and examinations. As a result, the present inventors found out the relationship (1) among alloy components preventing coarsening of a structure of a weld metal and obtaining a fine structure to thereby satisfy the mechanical properties in high heat input electroslag welding. Each component such as C or Si in the relationship (1) designates the content (mass%) of the component with respect to the total mass of the wire, but its unit is not shown in the relationship (1). The same is applied to the relationships (2) and (3) which are described later.

$$0.150 \leq C + Si/30 + Mn/20 + Ni/60 \leq 0.300 \qquad (1)$$

When the parameter of the relationship (1) is less than 0.150, predetermined strength cannot be obtained. The parameter of the relationship (1) is preferably 0.160 or more, and more preferably 0.170 or more. On the other hand, when the parameter of the relationship (1) is more than 0.300, the strength of the weld metal is excessive so that the cryogenic toughness deteriorates. The parameter of the relationship (1) is preferably 0.290 or less, and more preferably 0.280 or less.

In the same manner, there is a case that required mechanical properties are not satisfied in spite of the specified component ranges. Therefore, the present inventors carried out further deeper researches and examinations. As a result, the present inventors found out the relationship (2) among alloy components preventing coarsening of a structure of a weld metal and obtaining a fine structure to thereby satisfy the mechanical properties in high heat input electroslag welding using a wire containing at least one element selected from the group consisting of Cu, Cr, Mo, W, Nb, V and B.

$$0.150 \leq C + Si/30 + W/30 + Mn/20 + Cu/20 + Ni/60 + Cr/20 + Mo/15 + Nb/10 + V/10 + 5 \times B \leq 0.300 \qquad (2)$$

Cu, Cr, Mo, W, Nb, V and B are elements contributing to securing the strength. When the parameter of the relationship (2) is less than 0.150, predetermined strength cannot be obtained. The parameter of the relationship (2) is preferably 0.160 or more, and more preferably 0.170 or more. On the other hand, when the parameter of the relationship (2) is more than 0.300, the strength of the weld metal is excessive so that the cryogenic toughness deteriorates. The parameter of the relationship (2) is preferably 0.290 or less, and more preferably 0.280 or less.

More preferable ranges of the aforementioned contents of Cu, Cr, Mo, W, Nb, V and B are described below.

More preferable ranges:

Cu: 0.45% or less
Cr: 0.50% or less
Mo: 0.55% or less
W: 0.50% or less
Nb: 0.20% or less
V: 0.20% or less
B: 0.01% or less

In addition, it is preferable to further contain at least one element selected from the group consisting of Ca, Mg, REM, Zr, Al and Ti, and to satisfy the relationship:

$$0.001 \leq 1.6(Ca+Mg)+1.25(REM+Zr)+Al+0.8Ti \leq 0.70 \qquad (3)$$

Ca, Mg, REM, Zr, Al and Ti are deoxidizing elements, which have an effect of reducing the concentration of oxygen in the weld metal to thereby improve the cryogenic toughness. In order to exert such an effect effectively, the parameter of the relationship (3) is preferably 0.001 or more. However, in a case of high heat input welding with a large amount of heat input as in the present invention, the cooling rate after welding is so low that coarsening tends to proceed due to aggregation or coalescence of oxides, as described previously. Therefore, excessive addition increases coarse oxides. In order to secure the cryogenic toughness, the parameter of the relationship (3) is preferably 0.70 or less. In addition, the parameter of the relationship (3) is more preferably 0.10 or more.

More preferable ranges of the aforementioned contents of Ca, Mg, REM, Zr, Al and Ti are described below. More preferable ranges:

Ca: 0.0005-0.20%;
Mg: 0.0005-0.20%;
REM: 0.001-0.20%;
Zr: 0.001-0.15%;
Al: 0.001-0.20%;
Ti: 0.001-0.10%

The remainder of the electroslag welding wire according to the present invention consists of inevitable impurities. Examples of the inevitable impurities include P, S, As, Sb, Sn, Bi, O, N, etc.

It is preferable that the electroslag welding wire according to the present invention has a surface plated with Cu in order to enhance the electrical conductivity. The Cu plating amount is preferably 0.10% or more and 0.30 or less.

The electroslag welding wire according to the present invention may be either a solid wire or a flux cored wire. Of them, the flux cored wire is a wire in which the inside of a shell (hereinafter also referred to as hoop) is filled with flux. Components of the flux cored wire can be easily designed. In addition, the flux cored wire is excellent in deposition rate, deposition efficiency, etc.

The composition of the aforementioned hoop is not particularly limited as long as the composition of the flux cored wire is within the aforementioned ranges.

Fluxes of flux cored wires are roughly classified into oxide/fluoride-based ones and metal-based ones. The metal-based flux cored wires are sometimes called metal cored wires (MCW).

The flux filling ratio of the flux cored wire is preferably 5-25%. Outside that range, there arises a problem such as deterioration in workability. Here, the flux filling ratio is defined as a ratio of the mass of the flux with which the hoop is filled to the total mass of the wire. The total mass of the wire is a total of the mass of the hoop and the mass of the flux.

Fluxes for the flux cored wire are roughly classified into oxide/fluoride-based ones and metal-based ones. The metal-based flux satisfies the aforementioned ranges of the wire composition. The oxide/fluoride-based flux (i.e., slag forming agent) is contained in an amount of more than 0% and 15% or less with respect to the total mass of the wire. The oxide/fluoride-based flux contains at least one selected from the group consisting of $SiO_2$, CaO, $CaF_2$, $BaF_2$, MgO, $Al_2O_3$, MnO, $TiO_2$, $ZrO_2$, FeO, $Na_2O$, $K_2O$, and BaO, and satisfies the following relationship (4). Each component such as CaO or $CaF_2$ in the relationship (4) designates the content (mass%) of the component with respect to the total mass of the wire.

$$(CaO+CaF_2+BaF_2+MgO+BaO+Na_2O+K_2O)/(SiO_2+0.5(Al_2O_3+TiO_2+ZrO_2+MnO$$

$$+FeO))\geq 1.00 \quad (4)$$

The left side is taken as >100 when the slag forming agent does not contain any of $SiO_2$, $Al_2O_3$, $TiO_2$, $ZrO_2$, MnO and FeO.

When the slag forming agent is used, the slag forming agent is melted and formed into slag during electroslag welding, so that the slag protects molten metal and prevents nitrogen and oxygen from entering the molten metal from the atmosphere. Further, when the slag forming agent is regulated within the range of the composition relationship (4), the content of oxygen in the weld metal is reduced, and the cryogenic toughness is improved. The parameter of the relationship (4) is preferably 1.00 or more, and more preferably 1.30 or more. In the slag forming agent, carbonate such as $CaCO_3$, $BaCO_3$ or $MgCO_3$ may be used as flux filler to be filled in the hoop. However, the carbonate is decomposed by heat during welding so as to generate $CO_2$ gas and increase the content of oxygen in the weld metal to thereby affect the cryogenic toughness. It is therefore preferable not to use any carbonate as flux filler. When carbonate is used, the parameter of the relationship (4) is calculated in consideration of the thermal decomposition of the carbonate so that an amount corresponding to $CO_2$ is excluded from the actual weight of the carbonate. That is, the contents of $CaCO_3$, $BaCO_3$ and $MgCO_3$ are converted into the contents of CaO, BaO and MgO respectively.

A method for manufacturing the flux cored wire is not particularly limited, but it may be manufactured by a general process. For example, the flux cored wire is manufactured as follows. That is, a hoop of soft steel is formed into a U-shape. The U-shaped hoop is filled with flux, and then molded into a cylindrical shape internally filled with the flux. The hoop filled with the flux is drawn to have an intended diameter.

(Flux)

During electroslag welding, flux is additionally put to compensate molten slag which is reduced with the advance of the welding. This flux is referred to as flux simply in the present description. In the electroslag welding, with the advance of the welding, molten metal is cooled and formed into a weld metal, and a part of a molten slag bath is formed into a molten slag layer. With the advance of the welding, the molten slag layer is cooled and formed into solidified slag. Thus, the molten slag is consumed. Flux is used for compensating the reduction of the molten slag bath. The flux is roughly classified into melt flux and bond (i.e., baked) flux. The melt flux is manufactured by melting and crushing various raw materials in an electric furnace or the like. On the other hand, the baked flux is manufactured as follows. That is, various raw materials are bound by a binder such as alkaline silicate, granulated, and then baked. The baked flux sometimes uses the aforementioned carbonate as a raw material. However, the carbonate is decomposed by heat during welding so as to generate $CO_2$ gas and increase the content of oxygen in the weld metal to thereby affect the cryogenic toughness. It is therefore preferable to use the melt flux.

The flux to be used in the present invention has the following composition.

$SiO_2$: 0-35%

$SiO_2$ is an acidic component, which is a component for adjusting the viscosity and the melting point of the molten slag. In the present invention, the viscosity and the melting point can be adjusted by other components. Thus, $SiO_2$ does not have to be contained. On the other hand, if contained, when the content of $SiO_2$ is more than 35%, the viscosity of the molten slag is high, which causes lack of penetration. The content of $SiO_2$ is 35% or less, and preferably 30% or less.

CaO: 5-60%

CaO is a basic component, which is a component effective in adjusting the viscosity and the melting point of the molten slag, and which is also highly effective in reducing the content of oxygen in the weld metal. When the content of CaO is less than 5%, the content of oxygen in the weld metal increases. Therefore, the content of CaO is 5% or more, and preferably 10% or more. However, when the content of CaO is more than 60%, undercut and slag entanglement occur. Therefore, the content of CaO is 60% or less, and preferably 55% or less.

$CaF_2$: 3-50%

$CaF_2$ is also a basic component, which is a component effective in adjusting the viscosity and the melting point of the molten slag, and which is also high in effect of reducing the content of oxygen in the weld metal. When the content

of CaF$_2$ is less than 3%, the content of oxygen in the weld metal increases. Therefore, the content of CaF$_2$ is 3% or more, and preferably 5% or more. However, when the content of CaF$_2$ is more than 50%, undercut and slag entanglement tend to occur, and welding is unstable due to fluoride gas generated during the welding. Therefore, the content of CaF$_2$ is 50% or less, and preferably 45% or less.

BaF$_2$: 0-20%

BaF$_2$ is also a basic component, which is a component effective in adjusting the viscosity and the melting point of the molten slag, and which is also high in effect of reducing the content of oxygen in the weld metal. In the present invention, the viscosity and the melting point, and further the content of oxygen in the weld metal can be adjusted by other components. Thus, BaF$_2$ does not have to be contained. On the other hand, if contained, when the content of BaF$_2$ is more than 20%, the melting point of the molten slag is so low that the viscosity is insufficient. Thus, the molten slag is too easily discharged from between a sliding copper backing and the weld metal. As a result, the weld metal which cannot be held by the molten slag burns through. Therefore, the content of BaF$_2$ is 20% or less, and preferably 15% or less.

MgO: 0-20%

MgO is also a basic component, which is a component effective in adjusting the viscosity and the melting point of the molten slag. In the present invention, the viscosity and the melting point can be adjusted by other components. Thus, MgO does not have to be contained. On the other hand, if contained, when the content of MgO is more than 20%, the melting point of the molten slag is so high that the viscosity is also high enough to cause a lack of joint penetration. Therefore, the content of MgO is 20% or less, and preferably 15% or less.

Al$_2$O$_3$: 0-65%

Al$_2$O$_3$ is a component effective in adjusting the viscosity and the melting point of the molten slag. In the present invention, the viscosity and the melting point can be adjusted by other components. Thus, Al$_2$O$_3$ does not have to be contained. On the other hand, if contained, when the content of Al$_2$O$_3$ is more than 65%, the viscosity of the molten slag is high, which causes lack of penetration. Therefore, the content of Al$_2$O$_3$ is 65% or less, and preferably 60% or less.
In addition, the content of Al$_2$O$_3$ is preferably 3% or more.

MnO: 0-20%

MnO is a component effective in adjusting the viscosity and the melting point of the molten slag. In the present invention, the viscosity and the melting point can be adjusted by other components. Thus, MnO does not have to be contained. On the other hand, if contained, when the content of MnO is more than 20%, the melting point of the molten slag is so low that the viscosity is insufficient. Thus, the molten slag is too easily discharged from between the sliding copper backing and the weld metal. As a result, the weld metal which cannot be held by the molten slag burns through. Therefore, the content of MnO is 20% or less, and preferably 15% or less.

TiO$_2$: 0-10% and ZrO$_2$: 0-10%

TiO$_2$ and ZrO$_2$ are components effective in adjusting the melting point of the molten slag. In the present invention, the melting point can be adjusted by other components. Thus, TiO$_2$ and ZrO$_2$ do not have to be contained. On the other hand, if contained, when the content of each of TiO$_2$ and ZrO$_2$ is more than 10%, the viscosity increases suddenly near the melting point so as to easily cause slag entanglement. Therefore, the content of each of TiO$_2$ and ZrO$_2$ is 10% or less, and preferably 5% or less.

FeO: 0-5%

FeO is a component effective in adjusting the viscosity and the melting point of the molten slag, and is also highly effective in reducing the content of oxygen in the weld metal. In the present invention, the viscosity and the melting point can be adjusted by other components. Thus, FeO does not have to be contained. On the other hand, if contained, when the content of FeO is more than 5%, slag generated in a bead surface tends to seize up thereon. Therefore, the content of FeO is 5% or less, and preferably 3% or less.

Na$_2$O: 0-10%

Na$_2$O is a component very effective in adjusting the viscosity of the molten slag. In the present invention, the viscosity and the melting point can be adjusted by other components. Thus, Na$_2$O does not have to be contained. On the other hand, if contained, when the content of Na$_2$O is more than 10%, the melting point of the molten slag is so low that the viscosity is insufficient. Thus, the molten slag is too easily discharged from between the sliding copper backing and the weld metal. As a result, the weld metal which cannot be held by the molten slag burns through. Therefore, the content of Na$_2$O is 10% or less, and preferably 7% or less.

K$_2$O: 0-10%

K$_2$O is a component very effective in adjusting the viscosity of the molten slag. In the present invention, the viscosity and the melting point can be adjusted by other components. Thus, K$_2$O does not have to be contained. On the other hand, if contained, when the content of K$_2$O is more than 10%, the melting point of the molten slag is so low that the viscosity is insufficient. Thus, the molten slag is too easily discharged from between the sliding copper backing and the weld metal. As a result, the weld metal which cannot be held by the molten slag burns through. Therefore, the content of K$_2$O is 10% or less, and preferably 7% or less.

BaO: 0-20%

BaO is a basic component, which is a component effective in adjusting the viscosity and the melting point of the molten slag, and which is also highly effective in reducing the content of oxygen in the weld metal. In the present invention, the viscosity and the melting point can be adjusted by other components. Thus, BaO does not have to be contained. On the other hand, if contained, when the content of BaO is more than 20%, the melting point of the molten slag is so low that the viscosity is insufficient. Thus, the molten slag is too easily discharged from between the sliding copper backing and the weld metal. As a result, the weld metal which cannot be held by the molten slag burns through. Therefore, the content of BaO is 20% or less, and preferably 15% or less.

It is required that the composition of the flux has a content of each component within a limited range thereof and satisfies the following relationship (5) in order to effectively reduce the content of oxygen in the weld metal and to improve the toughness of the weld metal portion. Each component such as CaO or CaF$_2$ in the relationship (5) designates a content (mass%) of the component with respect to the total mass of the flux.

$$(CaO + CaF_2 + BaF_2 + MgO + BaO + Na_2O + K_2O)/(SiO_2 + 0.5(Al_2O_3 + TiO_2 + ZrO_2 + MnO + FeO)) \geq 1.00 \qquad (5)$$

The left side is taken as >100 when the flux does not contain any of SiO$_2$, Al$_2$O$_3$, TiO$_2$, ZrO$_2$, MnO and FeO.

The flux used according to the present invention has the aforementioned composition with the remainder consisting of inevitable impurities such as P, S, As, Sb, Sn, Bi, etc.

(Weld Joint)

The weld joint is manufactured according to the present invention by electroslag welding using the aforementioned electroslag welding wire and the aforementioned flux. The weld metal in the weld joint has the same composition (content of each component) as the composition of the electroslag welding wire, except that the remainder consists of Fe and inevitable impurities. The operation and the effect of each component are also the same. Accordingly, in the following description, the operation and the effect of each component overlapping with that in the electroslag welding wire described previously will be omitted to avoid redundant description, and only a range thereof will be described.

C: more than 0% and 0.07% or less
preferable upper limit: 0.06%

Si: more than 0% and 0.50% or less
preferable upper limit: 0.40%, more preferably 0.30%

Mn: more than 0% and 1.0% or less
preferable upper limit: 0.8%

Ni: 6.0-15.0%

preferable lower limit: 7.0%

preferable upper limit: 14.0%, more preferably 12.0%

In addition, the weld metal in the weld joint satisfies the following relationship (6). Each component such as C or Si in the relationship (6) designates the content (mass%) of the component with respect to the total mass of the weld metal, but its unit is not shown in the relationship (6).

$$0.150 \leq C + Si/30 + Mn/20 + Ni/60 \leq 0.300 \qquad (6)$$

The present inventors found out a technical significance in that the weld metal satisfies the relationship (6) from a similar viewpoint to that in the relationship (1) in the aforementioned wire. When the parameter of the relationship (6) is less than 0.150, predetermined strength cannot be obtained. The parameter of the relationship (6) is preferably 0.160 or more, and more preferably 0.170 or more. On the other hand, when the parameter of the relationship (6) is more than 0.300, the strength of the weld metal is so high that the cryogenic toughness deteriorates. The parameter of the relationship (6) is preferably 0.290 or less, and more preferably 0.280 or less.

In addition, when the weld metal in the weld joint further contains at least one element selected from the group consisting of Cu, Cr, Mo, W, Nb, V and B, the weld metal satisfies the following relationship (7). Each component such as C or Si in the relationship (7) designates the content (mass%) of the component with respect to the total mass of the weld metal, but its unit is not shown in the relationship (7).

$$0.150 \leq C + Si/30 + W/30 + Mn/20 + Cu/20 + Ni/60 + Cr/20 + Mo/15 + Nb/10 + V/10 + 5 \times B \leq 0.300 \qquad (7)$$

Cu, Cr, Mo, W, Nb, V and B are elements contributing to securing the strength. The present inventors found out a technical significance in that the weld metal satisfies the relationship (7) from a similar viewpoint to that in the relationship (2) in the aforementioned wire. When the parameter of the relationship (7) is less than 0.150, predetermined strength cannot be obtained. The parameter of the relationship (7) is preferably 0.160 or more, and more preferably 0.170 or more. On the other hand, when the parameter of the relationship (7) is more than 0.300, the strength of the weld metal is so high that the cryogenic toughness deteriorates. The parameter of the relationship (7) is preferably 0.290 or less, and more preferably 0.280 or less.

The preferable content of each of Cu, Cr, Mo, W, Nb, V and B in the weld metal is the same as the preferable content of the component in the wire.

O: 0% or more and 0.025% or less

O forms oxides. The oxides act as starting points of void formation in a charpy test. Thus, the cryogenic toughness deteriorates. Therefore, the content of O is 0.025% or less, and preferably not contained.

N: 0% or more and 0.010% or less

N acts as a solid solution element reinforcing the matrix of the weld metal portion, and also acts as an element triggering a brittle fracture. Thus, the cryogenic toughness deteriorates. Therefore, the content of N is 0.010% or less, and preferably not contained.

The weld metal used in the method according to the present invention has the aforementioned fundamental composition. The remainder consists of: iron; Cu, Cr, Mo, W, Nb, V and B added from the wire; Ca, Mg, REM, Al, Zr and Ti added as deoxidizing agents and partially left behind as slag in the weld metal without being discharged therefrom; and inevitable impurities. Examples of the inevitable impurities include P, S, As, Sb, Sn, Bi, etc.

According to the present invention, a steel plate containing 5-10% of Ni is used as a base metal to be used for manufacturing the weld joint. When the content of Ni is less than 5%, there is, for example, a problem that cryogenic toughness cannot be secured. The content of Ni is preferably 5.2% or more, and more preferably 6.5% or more. However, when the content of Ni is more than 10%, the steel material cost increases. Therefore, the content of Ni is preferably 10% or less. The content of Ni is more preferably 9.5% or less.

Examples

In the present examples, weld metals were manufactured under the following welding conditions, using steel plates having compositions (with the remainder consisting of inevitable impurities) shown in Table 1 as base metals, electroslag welding wires having compositions shown in Tables 2 to 5, and fluxes having compositions shown in Table 6. In Tables 1 to 6 and the following Tables 7 to 10, the content of each component is designated by mass%, and "0" in each component of each composition means that the content of the component is less than a detection limit in composition analysis.

In addition, each slag amount shown in Tables 2 to 5 is an amount of a slag forming agent contained in a wire, in which a value calculated by the expression (4) based on the composition thereof is described. As tested wires, flux cored wires, MCWs, and solid wires were used. When an MCW or a solid wire was used, the used wire is described in a corresponding remarks column. When a flux cored wire was used, a corresponding remarks column is blank. In addition, whether each wire was plated with Cu or not is shown in a corresponding remarks column. The Cu plating amount was set within a range of 0.10-0.30%. The Cu amount of each wire in Tables 2 to 5 is expressed as a total of the Cu plating amount and an amount contained as an alloy in the wire excluding the Cu plating.

Further, as for each wire shown in Tables 2 to 5, if the wire does not contain any of Cu, Cr, Mo, W, Nb, V and B, only a parameter value of the relationship (1) is described, but the column of a parameter value of the relationship (2) is blank. On the other hand, as for each wire containing at least one element selected from the group consisting of Cu, Cr, Mo, W, Nb, V and B, only the parameter value of the relationship (2) is described, but the column of the parameter value of the relationship (1) is blank.

Table 1 Chemical components of base metal

| Sign | C | Si | Mn | Ni | Fe |
|------|-----|------|------|------|------|
| 9N | 0.030 | 0.25 | 0.60 | 9.50 | 89.6 |
| 7N | 0.050 | 0.22 | 0.69 | 7.32 | 91.7 |
| 5N | 0.045 | 0.24 | 0.77 | 5.33 | 93.6 |

Table 2    Chemical components of wire

| | C | Si | Mn | Ni | Fe | Cu | Cr | Mo | W | Nb | V | B | Ca | Mg | REM | Zr | Al | Ti |
|------|-------|-------|------|------|----|----|------|------|------|----|---|-------|------|------|------|----|------|----|
| No.1 | 0.048 | 0.23 | 0.45 | 9.4 | 87 | 0 | 0 | 0 | 0 | 0 | 0 | 0 | 0 | 0 | 0 | 0 | 0 | 0 |
| No.2 | 0.020 | 0.19 | 0.15 | 13.9 | 83 | 0 | 0 | 0 | 0 | 0 | 0 | 0 | 0.08 | 0.08 | 0.08 | 0 | 0.02 | 0 |
| No.3 | 0.033 | 0.13 | 0.14 | 14.0 | 85 | 0 | 0 | 0 | 0 | 0 | 0 | 0 | 0 | 0 | 0 | 0 | 0 | 0 |
| No.4 | 0.043 | 0.003 | 0.27 | 10.9 | 86 | 0 | 0 | 0 | 0 | 0 | 0 | 0 | 0 | 0 | 0 | 0 | 0 | 0 |
| No.5 | 0.031 | 0.39 | 0.18 | 9.4 | 83 | 0 | 0 | 0 | 0 | 0 | 0 | 0 | 0 | 0 | 0 | 0 | 0 | 0 |
| No.6 | 0.034 | 0.01 | 0.01 | 9.2 | 84 | 0 | 0 | 0 | 0 | 0 | 0 | 0 | 0 | 0 | 0 | 0 | 0 | 0 |
| No.7 | 0.030 | 0.30 | 0.21 | 11.0 | 86 | 0 | 0 | 0 | 0 | 0 | 0 | 0 | 0 | 0 | 0 | 0 | 0 | 0 |
| No.8 | 0.025 | 0.14 | 0.80 | 11.3 | 85 | 0 | 0 | 0 | 0 | 0 | 0 | 0 | 0 | 0 | 0 | 0 | 0 | 0 |
| No.9 | 0.021 | 0.05 | 0.72 | 8.0 | 91 | 0 | 0 | 0 | 0 | 0 | 0 | 0 | 0 | 0 | 0 | 0 | 0 | 0 |
| No.10 | 0.023 | 0.07 | 0.16 | 13.0 | 85 | 0 | 0 | 0 | 0 | 0 | 0 | 0 | 0 | 0 | 0 | 0 | 0 | 0 |
| No.11 | 0.019 | 0.17 | 0.52 | 10.6 | 84 | 0 | 0 | 0 | 0 | 0 | 0 | 0 | 0 | 0 | 0 | 0 | 0 | 0 |
| No.12 | 0.017 | 0.17 | 0.05 | 8.7 | 83 | 0 | 0 | 0 | 0 | 0 | 0 | 0 | 0 | 0 | 0 | 0 | 0 | 0 |
| No.13 | 0.033 | 0.34 | 0.51 | 12.5 | 85 | 0 | 0 | 0 | 0 | 0 | 0 | 0 | 0 | 0 | 0 | 0 | 0 | 0 |
| No.14 | 0.009 | 0.15 | 0.11 | 8.5 | 83 | 0 | 0 | 0 | 0 | 0 | 0 | 0.002 | 0 | 0 | 0 | 0 | 0 | 0 |
| No.15 | 0.024 | 0.28 | 0.35 | 9.5 | 85 | 0 | 0.33 | 0.33 | 0.34 | 0 | 0 | 0.004 | 0 | 0 | 0 | 0 | 0 | 0 |

Table 2 continued

In wire

|  | Parameter (1) | Parameter (2) | Parameter (3) | Slag | Parameter (4) | Remarks |
|---|---|---|---|---|---|---|
| No.1 | 0.235 |  | 0.000 | 2.8 | >100 |  |
| No.2 | 0.266 |  | 0.376 | 2.4 | >100 |  |
| No.3 | 0.278 |  | 0.000 | 0.6 | >100 |  |
| No.4 | 0.238 |  | 0.000 | 2.7 | >100 |  |
| No.5 | 0.210 |  | 0.000 | 6.9 | 3.71 |  |
| No.6 | 0.188 |  | 0.000 | 6.6 | 3.71 |  |
| No.7 | 0.234 |  | 0.000 | 2.4 | >100 |  |
| No.8 | 0.258 |  | 0.000 | 2.6 | >100 |  |
| No.9 | 0.192 |  | 0.000 | 0.1 | >100 |  |
| No.10 | 0.250 |  | 0.000 | 1.6 | 10.11 |  |
| No.11 | 0.227 |  | 0.000 | 4.6 | 3.71 |  |
| No.12 | 0.170 |  | 0.000 | 8.0 | 1.90 |  |
| No.13 | 0.278 |  | 0.000 | 1.5 | 10.11 |  |
| No.14 |  | 0.171 | 0.000 | 8.1 | 1.90 |  |
| No.15 |  | 0.279 | 0.000 | 3.7 | >100 |  |

Table 2 continued

|  | C | Si | Mn | Ni | Fe | Cu | Cr | Mo | W | Nb | V | B | Ca | Mg | REM | Zr | Al | Ti |
|---|---|---|---|---|---|---|---|---|---|---|---|---|---|---|---|---|---|---|
| No.16 | 0.042 | 0.16 | 0.04 | 9.0 | 86 | 0 | 0 | 0.45 | 0 | 0 | 0 | 0 | 0 | 0 | 0 | 0 | 0 | 0 |
| No.17 | 0.040 | 0.17 | 0.20 | 10.2 | 84 | 0 | 0.47 | 0 | 0 | 0 | 0 | 0 | 0 | 0 | 0 | 0 | 0 | 0 |
| No.18 | 0.007 | 0.18 | 0.01 | 11.0 | 85 | 0 | 0 | 0 | 0.48 | 0 | 0 | 0 | 0 | 0 | 0 | 0 | 0 | 0 |
| No.19 | 0.006 | 0.02 | 0.21 | 10.4 | 87 | 0.42 | 0 | 0 | 0 | 0 | 0 | 0 | 0 | 0 | 0 | 0 | 0 | 0 |
| No.20 | 0.016 | 0.12 | 0.15 | 10.5 | 84 | 0 | 0 | 0 | 0 | 0 | 0 | 0 | 0.05 | 0.04 | 0 | 0 | 0 | 0 |
| No.21 | 0.049 | 0.11 | 0.09 | 11.5 | 87 | 0 | 0 | 0 | 0 | 0 | 0 | 0 | 0 | 0.08 | 0 | 0 | 0.04 | 0 |
| No.22 | 0.046 | 0.12 | 0.10 | 11.4 | 88 | 0 | 0 | 0 | 0 | 0 | 0 | 0 | 0.08 | 0.08 | 0.06 | 0 | 0.02 | 0 |
| No.23 | 0.013 | 0.09 | 0.09 | 11.7 | 88 | 0 | 0 | 0 | 0 | 0 | 0 | 0 | 0 | 0 | 0.03 | 0 | 0 | 0.02 |
| No.24 | 0.044 | 0.28 | 0.08 | 9.7 | 86 | 0 | 0 | 0 | 0 | 0 | 0 | 0 | 0.08 | 0.10 | 0.09 | 0 | 0 | 0 |
| No.25 | 0.012 | 0.15 | 0.07 | 13.4 | 82 | 0 | 0 | 0 | 0 | 0 | 0 | 0 | 0.08 | 0.09 | 0.08 | 0 | 0.08 | 0 |

Table 2 continued

In wire

| | Parameter (1) | Parameter (2) | Parameter (3) | Slag | Parameter (4) | Remarks |
|---|---|---|---|---|---|---|
| No.16 | | 0.229 | 0.000 | 4.2 | 1.90 | |
| No.17 | | 0.249 | 0.000 | 4.8 | 1.90 | |
| No.18 | | 0.213 | 0.000 | 3.2 | >100 | |
| No.19 | | 0.212 | 0.000 | 1.8 | >100 | Cu plated wire |
| No.20 | 0.203 | | 0.144 | 5.0 | 3.71 | |
| No.21 | 0.249 | | 0.168 | 1.0 | >100 | |
| No.22 | 0.245 | | 0.351 | 0.0 | - | MCW |
| No.23 | 0.216 | | 0.054 | 0.0 | - | Solid |
| No.24 | 0.219 | | 0.401 | 3.5 | >100 | |
| No.25 | 0.244 | | 0.452 | 3.9 | >100 | |

Table 3   Chemical components of wire

| | C | Si | Mn | Ni | Fe | Cu | Cr | Mo | W | Nb | V | B | Ca | Mg | REM | Zr | Al | Ti |
|---|---|---|---|---|---|---|---|---|---|---|---|---|---|---|---|---|---|---|
| No.26 | 0.022 | 0.17 | 0.14 | 13.4 | 82 | 0 | 0 | 0 | 0 | 0 | 0 | 0 | 0 | 0.08 | 0 | 0.11 | 0.20 | 0 |
| No.27 | 0.027 | 0.21 | 0.11 | 10.9 | 87 | 0 | 0 | 0 | 0 | 0 | 0 | 0 | 0.20 | 0 | 0.20 | 0 | 0 | 0.03 |
| No.28 | 0.021 | 0.20 | 0.13 | 11.0 | 84 | 0 | 0 | 0 | 0 | 0 | 0 | 0 | 0.04 | 0.20 | 0.04 | 0 | 0.02 | 0 |
| No.29 | 0.024 | 0.18 | 0.21 | 11.5 | 86 | 0 | 0 | 0 | 0 | 0 | 0 | 0 | 0 | 0 | 0 | 0 | 0.11 | 0 |
| No.30 | 0.028 | 0.08 | 0.14 | 10.8 | 87 | 0 | 0 | 0 | 0 | 0 | 0 | 0 | 0.08 | 0 | 0.07 | 0 | 0 | 0 |
| No.31 | 0.019 | 0.10 | 0.18 | 9.8 | 86 | 0 | 0 | 0 | 0 | 0 | 0 | 0 | 0 | 0.12 | 0 | 0 | 0 | 0 |
| No.32 | 0.017 | 0.14 | 0.15 | 11.0 | 86 | 0 | 0.35 | 0.34 | 0.36 | 0 | 0 | 0.002 | 0.08 | 0.08 | 0.07 | 0 | 0.03 | 0 |
| No.33 | 0.008 | 0.04 | 0.13 | 8.8 | 83 | 0 | 0 | 0.12 | 0 | 0 | 0 | 0 | 0.07 | 0 | 0.07 | 0 | 0 | 0.09 |
| No.34 | 0.008 | 0.07 | 0.14 | 8.7 | 84 | 0 | 0 | 0 | 0.04 | 0 | 0 | 0.005 | 0.11 | 0.09 | 0.12 | 0 | 0.12 | 0 |
| No.35 | 0.022 | 0.18 | 0.15 | 13.0 | 84 | 0 | 0 | 0.34 | 0 | 0 | 0 | 0 | 0 | 0.04 | 0 | 0 | 0.04 | 0 |
| No.36 | 0.024 | 0.21 | 0.14 | 13.3 | 85 | 0 | 0.35 | 0 | 0 | 0 | 0 | 0 | 0.16 | 0.15 | 0.16 | 0 | 0 | 0 |
| No.37 | 0.021 | 0.22 | 0.15 | 11.9 | 87 | 0 | 0.25 | 0 | 0 | 0 | 0 | 0 | 0.15 | 0.10 | 0 | 0 | 0.08 | 0 |
| No.38 | 0.013 | 0.04 | 0.06 | 9.6 | 90 | 0.15 | 0 | 0 | 0 | 0 | 0 | 0.003 | 0 | 0 | 0.03 | 0 | 0 | 0.02 |

Table 3 continued

In wire

| | Parameter (1) | Parameter (2) | Parameter (3) | Slag | Parameter (4) | Remarks |
|---|---|---|---|---|---|---|
| No.26 | 0.258 | | 0.466 | 3.8 | >100 | |
| No.27 | 0.221 | | 0.594 | 1.2 | >100 | |
| No.28 | 0.218 | | 0.454 | 4.2 | 10.11 | |
| No.29 | 0.232 | | 0.110 | 1.9 | >100 | |
| No.30 | 0.218 | | 0.216 | 1.7 | >100 | |
| No.31 | 0.195 | | 0.192 | 3.7 | >100 | |
| No.32 | | 0.275 | 0.374 | 1.3 | >100 | |
| No.33 | | 0.171 | 0.272 | 7.6 | 10.11 | |
| No.34 | | 0.189 | 0.590 | 6.5 | 15.00 | |
| No.35 | | 0.275 | 0.104 | 2.1 | >100 | |
| No.36 | | 0.277 | 0.696 | 0.4 | >100 | |
| No.37 | | 0.247 | 0.480 | 0.0 | - | MCW |
| No.38 | | 0.200 | 0.054 | 0.0 | - | Solid, Cu plated wire |

Table 3 continued

| | C | Si | Mn | Ni | Fe | Cu | Cr | Mo | W | Nb | V | B | Ca | Mg | REM | Zr | Al | Ti |
|---|---|---|---|---|---|---|---|---|---|---|---|---|---|---|---|---|---|---|
| No.39 | 0.008 | 0.07 | 0.15 | 10.8 | 88 | 0 | 0 | 0 | 0 | 0 | 0 | 0 | 0.12 | 0.08 | 0.10 | 0 | 0.13 | 0 |
| No.40 | 0.022 | 0.18 | 0.13 | 11.0 | 87 | 0 | 0.25 | 0 | 0 | 0 | 0 | 0 | 0.11 | 0.07 | 0.12 | 0 | 0.14 | 0 |
| No.41 | 0.027 | 0.07 | 0.12 | 11.3 | 88 | 0 | 0 | 0 | 0 | 0 | 0 | 0 | 0 | 0 | 0 | 0 | 0 | 0 |
| No.42 | 0.022 | 0.09 | 0.15 | 12.8 | 86 | 0 | 0 | 0.05 | 0.10 | 0 | 0 | 0 | 0 | 0 | 0 | 0 | 0 | 0 |
| No.43 | 0.031 | 0.10 | 0.09 | 8.2 | 83 | 0 | 0 | 0 | 0 | 0 | 0 | 0 | 0.08 | 0.08 | 0.07 | 0 | 0.03 | 0 |
| No.44 | 0.018 | 0.06 | 0.09 | 8.1 | 82 | 0 | 0 | 0 | 0 | 0.05 | 0.05 | 0 | 0 | 0 | 0 | 0 | 0 | 0 |
| No.45 | 0.019 | 0.08 | 0.07 | 9.6 | 88 | 0 | 0 | 0 | 0 | 0 | 0 | 0 | 0.08 | 0.09 | 0.08 | 0 | 0.08 | 0 |
| No.46 | 0.013 | 0.15 | 0.18 | 9.8 | 87 | 0 | 0 | 0 | 0 | 0 | 0 | 0 | 0.08 | 0.09 | 0.08 | 0 | 0.08 | 0 |
| No.47 | 0.003 | 0.14 | 0.32 | 8.7 | 85 | 0 | 0 | 0 | 0 | 0 | 0 | 0 | 0 | 0 | 0 | 0 | 0 | 0 |
| No.48 | 0.011 | 0.18 | 0.07 | 8.5 | 87 | 0 | 0 | 0 | 0 | 0 | 0 | 0 | 0 | 0 | 0 | 0 | 0 | 0 |
| No.49 | 0.047 | 0.37 | 0.58 | 12.1 | 84 | 0 | 0 | 0 | 0 | 0 | 0 | 0 | 0 | 0 | 0 | 0 | 0 | 0 |
| No.50 | 0.009 | 0.19 | 0.13 | 8.2 | 87 | 0 | 0 | 0 | 0 | 0 | 0 | 0 | 0 | 0 | 0 | 0 | 0 | 0 |

Table 3 continued

In wire

| | Parameter (1) | Parameter (2) | Parameter (3) | Slag | Parameter (4) | Remarks |
|---|---|---|---|---|---|---|
| No.39 | 0.198 | | 0.575 | 0.4 | 1.30 | |
| No.40 | | 0.230 | 0.578 | 0.9 | 1.30 | |
| No.41 | 0.224 | | 0.000 | 0.4 | 1.30 | |
| No.42 | | 0.253 | 0.000 | 0.7 | 1.30 | |
| No.43 | 0.176 | | 0.374 | 8.2 | 10.11 | |
| No.44 | 0.160 | | 0.000 | 9.6 | 3.71 | |
| No.45 | | 0.195 | 0.452 | 1.7 | >100 | |
| No.46 | 0.190 | | 0.452 | 2.4 | >100 | |
| No.47 | 0.169 | | 0.000 | 5.7 | 10.11 | |
| No.48 | 0.162 | | 0.000 | 4.1 | 15.00 | |
| No.49 | 0.290 | | 0.000 | 2.8 | >100 | |
| No.50 | | 0.161 | 0.000 | 4.4 | 1.90 | |

Table 4    Chemical components of wire

| | C | Si | Mn | Ni | Fe | Cu | Cr | Mo | W | Nb | V | B | Ca | Mg | REM | Zr | Al | Ti |
|---|---|---|---|---|---|---|---|---|---|---|---|---|---|---|---|---|---|---|
| No.51 | 0.036 | 0.36 | 0.45 | 10.1 | 84 | 0.14 | 0 | 0 | 0.05 | 0.20 | 0.20 | 0 | 0 | 0 | 0 | 0 | 0 | 0 |
| No.52 | 0.004 | 0.18 | 0.15 | 8.7 | 85 | 0 | 0.04 | 0 | 0 | 0 | 0 | 0 | 0 | 0 | 0 | 0 | 0 | 0 |
| No.53 | 0.022 | 0.13 | 0.35 | 10.8 | 87 | 0 | 0 | 0 | 0 | 0 | 0 | 0 | 0.01 | 0 | 0 | 0 | 0 | 0 |
| No.54 | 0.014 | 0.24 | 0.30 | 8.9 | 86 | 0 | 0 | 0 | 0 | 0 | 0 | 0 | 0 | 0.02 | 0 | 0 | 0 | 0 |
| No.55 | 0.020 | 0.24 | 0.27 | 10.9 | 84 | 0 | 0 | 0 | 0 | 0 | 0 | 0 | 0 | 0 | 0.02 | 0 | 0 | 0 |
| No.56 | 0.046 | 0.08 | 0.06 | 9.1 | 85 | 0 | 0 | 0 | 0 | 0 | 0 | 0 | 0 | 0 | 0 | 0.03 | 0 | 0 |
| No.57 | 0.018 | 0.26 | 0.21 | 11.1 | 87 | 0 | 0 | 0 | 0 | 0 | 0 | 0 | 0 | 0 | 0 | 0 | 0.03 | 0 |
| No.58 | 0.008 | 0.10 | 0.18 | 9.3 | 86 | 0 | 0 | 0 | 0 | 0 | 0 | 0 | 0 | 0 | 0 | 0 | 0 | 0.02 |
| No.59 | 0.039 | 0.29 | 0.12 | 9.5 | 85 | 0 | 0 | 0 | 0 | 0 | 0 | 0 | 0 | 0.04 | 0.03 | 0 | 0 | 0 |
| No.60 | 0.019 | 0.15 | 0.18 | 11.0 | 86 | 0 | 0.05 | 0 | 0 | 0 | 0 | 0.004 | 0.01 | 0 | 0.01 | 0 | 0 | 0 |
| No.61 | 0.028 | 0.13 | 0.12 | 11.3 | 85 | 0 | 0 | 0 | 0.35 | 0 | 0 | 0 | 0 | 0.01 | 0 | 0 | 0 | 0 |
| No.62 | 0.052 | 0.008 | 0.03 | 8.4 | 90 | 0 | 0 | 0 | 0 | 0 | 0 | 0 | 0 | 0 | 0 | 0 | 0 | 0 |
| No.63 | 0.069 | 0.003 | 0.16 | 11.5 | 86 | 0 | 0 | 0 | 0 | 0 | 0 | 0 | 0 | 0 | 0 | 0 | 0 | 0 |
| No.64 | 0.032 | 0.50 | 0.21 | 11.6 | 87 | 0 | 0 | 0 | 0 | 0 | 0 | 0 | 0 | 0 | 0 | 0 | 0 | 0 |

Table 4 continued

In wire

| | Parameter (1) | Parameter (2) | Parameter (3) | Slag | Parameter (4) | Remarks |
|---|---|---|---|---|---|---|
| No.51 | | 0.288 | 0.000 | 4.4 | 15.00 | Cu plated wire |
| No.52 | | 0.165 | 0.000 | 5.8 | 1.14 | |
| No.53 | 0.224 | | 0.016 | 1.6 | >100 | |
| No.54 | 0.185 | | 0.032 | 4.4 | 3.71 | |
| No.55 | 0.223 | | 0.025 | 4.5 | 1.14 | |
| No.56 | 0.203 | | 0.038 | 5.6 | 10.11 | |
| No.57 | 0.222 | | 0.030 | 1.3 | >100 | |
| No.58 | 0.175 | | 0.016 | 4.3 | 1.90 | |
| No.59 | 0.213 | | 0.102 | 4.9 | 1.14 | |
| No.60 | | 0.239 | 0.029 | 2.5 | >100 | |
| No.61 | | 0.238 | 0.016 | 3.0 | >100 | |
| No.62 | 0.194 | | 0.000 | 1.4 | >100 | |
| No.63 | 0.269 | | 0.000 | 2.2 | >100 | |
| No.64 | 0.253 | | 0.000 | 0.6 | >100 | |

Table 4 continued

| | C | Si | Mn | Ni | Fe | Cu | Cr | Mo | W | Nb | V | B | Ca | Mg | REM | Zr | Al | Ti |
|---|---|---|---|---|---|---|---|---|---|---|---|---|---|---|---|---|---|---|
| No.65 | 0.036 | 0.22 | 0.93 | 7.7 | 88 | 0 | 0 | 0 | 0 | 0 | 0 | 0 | 0 | 0 | 0 | 0 | 0 | 0 |
| No.66 | 0.027 | 0.06 | 1.00 | 12.7 | 86 | 0 | 0 | 0 | 0 | 0 | 0 | 0 | 0 | 0 | 0 | 0 | 0 | 0 |
| No.67 | 0.033 | 0.15 | 0.29 | 6.0 | 93 | 0 | 0 | 0 | 0 | 0 | 0 | 0 | 0 | 0 | 0 | 0 | 0 | 0 |
| No.68 | 0.011 | 0.16 | 0.17 | 15.0 | 84 | 0 | 0 | 0 | 0 | 0 | 0 | 0 | 0 | 0 | 0 | 0 | 0 | 0 |
| No.69 | 0.017 | 0.15 | 0.78 | 9.9 | 79 | 0 | 0 | 0 | 0 | 0 | 0 | 0 | 0 | 0 | 0 | 0 | 0 | 0 |
| No.70 | 0.006 | 0.09 | 0.07 | 8.3 | 84 | 0 | 0 | 0 | 0 | 0 | 0 | 0 | 0 | 0 | 0 | 0 | 0 | 0 |
| No.71 | 0.046 | 0.29 | 0.75 | 12.4 | 83 | 0 | 0 | 0 | 0 | 0 | 0 | 0 | 0 | 0 | 0 | 0 | 0 | 0 |
| No.72 | 0.005 | 0.04 | 0.06 | 8.4 | 83 | 0 | 0 | 0 | 0.04 | 0.03 | 0 | 0 | 0 | 0 | 0 | 0 | 0 | 0 |
| No.73 | 0.028 | 0.33 | 0.48 | 11.3 | 83 | 0.25 | 0 | 0.51 | 0 | 0 | 0 | 0 | 0 | 0 | 0 | 0 | 0 | 0 |
| No.74 | 0.027 | 0.12 | 0.66 | 10.7 | 87 | 0.25 | 0 | 0 | 0 | 0 | 0 | 0.008 | 0 | 0 | 0 | 0 | 0 | 0 |
| No.75 | 0.005 | 0.17 | 0.19 | 10.1 | 86 | 0 | 0 | 0 | 0 | 0 | 0 | 0 | 0.0007 | 0 | 0 | 0 | 0 | 0 |

Table 4 continued

In wire

|  | Parameter (1) | Parameter(2) | Parameter (3) | Slag | Parameter (4) | Remarks |
|---|---|---|---|---|---|---|
| No.65 | 0.218 |  | 0.000 | 3.0 | 10.11 |  |
| No.66 | 0.291 |  | 0.000 | 0.1 | >100 |  |
| No.67 | 0.153 |  | 0.000 | 0.4 | >100 |  |
| No.68 | 0.275 |  | 0.000 | 0.6 | >100 |  |
| No.69 | 0.226 |  | 0.000 | 10.1 | 1.14 |  |
| No.70 | 0.151 |  | 0.000 | 7.4 | 1.90 |  |
| No.71 | 0.300 |  | 0.000 | 3.4 | >100 |  |
| No.72 |  | 0.154 | 0.000 | 8.3 | 15.00 |  |
| No.73 |  | 0.298 | 0.000 | 4.0 | 1.90 | Cu plated wire |
| No.74 |  | 0.295 | 0.000 | 1.1 | >100 |  |
| No.75 | 0.189 |  | 0.001 | 3.4 | >100 |  |

[Table 5]

Table 5   Chemical components of wire

|  | C | Si | Mn | Ni | Fe | Cu | Cr | Mo | W | Nb | V | B | Ca | Mg | REM | Zr | Al | Ti |
|---|---|---|---|---|---|---|---|---|---|---|---|---|---|---|---|---|---|---|
| No.76 | 0.018 | 0.05 | 0.09 | 9.9 | 86 | 0 | 0 | 0 | 0 | 0 | 0 | 0 | 0 | 0.0007 | 0 | 0 | 0 | 0 |
| No.77 | 0.026 | 0.21 | 0.11 | 10.3 | 87 | 0 | 0 | 0 | 0 | 0 | 0 | 0 | 0 | 0 | 0.004 | 0 | 0 | 0 |
| No.78 | 0.041 | 0.19 | 0.42 | 8.5 | 86 | 0 | 0 | 0 | 0 | 0 | 0 | 0 | 0 | 0 | 0 | 0.005 | 0 | 0 |
| No.79 | 0.029 | 0.20 | 0.18 | 10.0 | 84 | 0 | 0 | 0 | 0 | 0 | 0 | 0 | 0 | 0 | 0 | 0 | 0.006 | 0 |
| No.80 | 0.025 | 0.10 | 0.26 | 10.3 | 85 | 0 | 0 | 0 | 0 | 0 | 0 | 0 | 0 | 0 | 0 | 0 | 0 | 0.008 |
| No.81 | 0.043 | 0.19 | 0.45 | 9.9 | 85 | 0 | 0 | 0 | 0 | 0 | 0 | 0 | 0.13 | 0.12 | 0.15 | 0 | 0.12 | 0.03 |
| No.82 | 0.019 | 0.15 | 0.18 | 10.8 | 87 | 0.25 | 0 | 0 | 0 | 0 | 0 | 0 | 0.13 | 0.12 | 0.15 | 0 | 0.14 | 0 |
| No.83 | 0.021 | 0.19 | 0.15 | 11.5 | 87 | 0 | 0 | 0 | 0 | 0 | 0 | 0 | 0.11 | 0.09 | 0.12 | 0 | 0.12 | 0 |
| No.84 | 0.022 | 0.18 | 0.23 | 11.5 | 87 | 0 | 0.25 | 0 | 0 | 0 | 0 | 0 | 0.11 | 0.09 | 0.12 | 0 | 0.12 | 0 |
| No.85 | 0.022 | 0.08 | 0.14 | 11.5 | 88 | 0 | 0 | 0 | 0 | 0 | 0 | 0 | 0 | 0 | 0 | 0 | 0 | 0 |
| No.86 | 0.022 | 0.08 | 0.18 | 11.3 | 88 | 0 | 0 | 0.10 | 0 | 0 | 0 | 0.002 | 0 | 0 | 0 | 0 | 0 | 0 |
| No.87 | 0.048 | 0.03 | 0.03 | 5.0 | 79 | 0 | 0 | 0 | 0 | 0 | 0 | 0 | 0 | 0 | 0 | 0 | 0 | 0 |
| No.88 | 0.016 | 0.04 | 0.39 | 7.0 | 92 | 0 | 0 | 0 | 0 | 0 | 0 | 0 | 0 | 0 | 0 | 0 | 0 | 0 |
| No.89 | 0.018 | 0.14 | 0.35 | 10.5 | 83 | 0 | 0 | 0 | 0 | 0 | 0 | 0 | 0.08 | 0 | 0.07 | 0 | 0 | 0 |

Table 5 continued

In wire

|  | Parameter (1) | Parameter(2) | Parameter (3) | Slag | Parameter (4) | Remarks |
|---|---|---|---|---|---|---|
| No.76 | 0.189 |  | 0.001 | 3.8 | >100 |  |
| No.77 | 0.210 |  | 0.005 | 2.3 | >100 |  |
| No.78 | 0.210 |  | 0.006 | 4.7 | 3.71 |  |
| No.79 | 0.211 |  | 0.006 | 5.5 | 10.11 |  |
| No.80 | 0.213 |  | 0.006 | 4.2 | 1.90 |  |
| No.81 | 0.237 |  | 0.732 | 3.8 | >100 |  |
| No.82 | 0.213 |  | 0.728 | 1.0 | 15.00 |  |
| No.83 | 0.227 |  | 0.590 | 0.6 | 0.54 |  |
| No.84 |  | 0.244 | 0.590 | 0.3 | 0.54 |  |
| No.85 | 0.223 |  | 0.000 | 0.2 | 0.54 |  |
| No.86 |  | 0.239 | 0.000 | 0.2 | 0.54 |  |
| No.87 | 0.151 |  | 0.000 | 14.8 | 10.11 |  |
| No.88 | 0.154 |  | 0.000 | 0.5 | >100 |  |
| No.89 | 0.215 |  | 0.216 | 5.7 | 1.36 | Containing carbonate in wire flux |

Table 5 continued

|  | C | Si | Mn | Ni | Fe | Cu | Cr | Mo | W | Nb | V | B | Ca | Mg | REM | Zr | Al | Ti |
|---|---|---|---|---|---|---|---|---|---|---|---|---|---|---|---|---|---|---|
| No.90 | 0.013 | 0.04 | 0.11 | 8.8 | 83 | 0 | 0.25 | 0 | 0 | 0 | 0 | 0 | 0.08 | 0 | 0.07 | 0 | 0 | 0 |
| No.91 | 0.081 | 0.09 | 0.38 | 6.8 | 88 | 0 | 0 | 0 | 0 | 0 | 0 | 0 | 0 | 0 | 0 | 0 | 0 | 0 |
| No.92 | 0.033 | 0.55 | 0.09 | 12.5 | 86 | 0 | 0 | 0 | 0 | 0 | 0 | 0 | 0 | 0 | 0 | 0 | 0 | 0 |
| No.93 | 0.038 | 0.09 | 1.30 | 7.5 | 90 | 0 | 0 | 0 | 0 | 0 | 0 | 0 | 0 | 0 | 0 | 0 | 0 | 0 |
| No.94 | 0.036 | 0.31 | 0.33 | 5.5 | 92 | 0 | 0 | 0 | 0 | 0 | 0 | 0 | 0 | 0 | 0 | 0 | 0 | 0 |
| No.95 | 0.021 | 0.13 | 0.13 | 15.7 | 83 | 0 | 0 | 0 | 0 | 0 | 0 | 0 | 0 | 0 | 0 | 0 | 0 | 0 |
| No.96 | 0.038 | 0.14 | 0.57 | 13.5 | 75 | 0 | 0 | 0 | 0 | 0 | 0 | 0 | 0 | 0 | 0 | 0 | 0 | 0 |
| No.97 | 0.004 | 0.01 | 0.02 | 8.1 | 84 | 0 | 0 | 0 | 0 | 0 | 0 | 0 | 0 | 0 | 0 | 0 | 0 | 0 |
| No.98 | 0.048 | 0.38 | 0.77 | 12.6 | 83 | 0 | 0 | 0 | 0 | 0 | 0 | 0 | 0 | 0 | 0 | 0 | 0 | 0 |
| No.99 | 0.004 | 0.01 | 0.02 | 8.1 | 83 | 0 | 0 | 0.04 | 0 | 0 | 0 | 0 | 0 | 0 | 0 | 0 | 0 | 0 |
| No.100 | 0.037 | 0.31 | 0.43 | 11.1 | 84 | 0.25 | 0.41 | 0 | 0 | 0.13 | 0.13 | 0 | 0 | 0 | 0 | 0 | 0 | 0 |

Table 5 continued

In wire

|         | Parameter (1) | Parameter(2) | Parameter (3) | Slag | Parameter (4) | Remarks |
|---------|---------------|--------------|---------------|------|---------------|---------|
| No.90   |               | 0.179        | 0.216         | 7.5  | 1.36          | Containing carbonate in wire flux |
| No.91   | 0.216         |              | 0.000         | 4.5  | 1.90          |         |
| No.92   | 0.264         |              | 0.000         | 0.7  | >100          |         |
| No.93   | 0.231         |              | 0.000         | 1.0  | >100          |         |
| No.94   | 0.155         |              | 0.000         | 1.7  | >100          |         |
| No.95   | 0.294         |              | 0.000         | 0.9  | >100          |         |
| No.96   | 0.296         |              | 0.000         | 10.7 | 1.30          |         |
| No.97   | 0.140         |              | 0.000         | 7.8  | 1.90          |         |
| No.98   | 0.309         |              | 0.000         | 3.1  | >100          |         |
| No.99   |               | 0.143        | 0.000         | 8.7  | 1.90          |         |
| No.100  |               | 0.313        | 0.000         | 3.1  | >100          | Cu plated wire |

Table 6 Flux

| Parameter (5) | Flux sign | CaO | $CaF_2$ | $BaF_2$ | MgO | BaO | $Na_2O$ | $K_2O$ | $SiO_2$ | $Al_2O_3$ | $TiO_2$ | $ZrO_2$ | MnO | FeO | TOTAL |
|---|---|---|---|---|---|---|---|---|---|---|---|---|---|---|---|
| | MIN | 5 | 3 | 0 | 0 | 0 | 0 | 0 | 0 | 0 | 0 | 0 | 0 | 0 | |
| | MAX | 60 | 50 | 20 | 20 | 20 | 10 | 10 | 35 | 55 | 10 | 10 | 20 | 5 | |
| 1.02 | A | 20 | 12 | 0 | 4 | 2 | 3 | 3 | 30 | 3 | 3 | 0 | 19 | 1 | 100 |
| 1.33 | B | 23 | 8 | 5 | 12 | 0 | 3 | 3 | 35 | 3 | 0 | 4 | 4 | 0 | 100 |
| 1.90 | C | 45 | 9 | 0 | 6 | 0 | 0 | 0 | 23 | 3 | 2 | 0 | 10 | 2 | 100 |
| 3.13 | D | 49 | 3 | 0 | 0 | 0 | 9 | 0 | 0 | 21 | 9 | 0 | 0 | 0 | 100 |
| 3.71 | E | 35 | 30 | 0 | 0 | 0 | 0 | 0 | 0 | 35 | 0 | 0 | 0 | 0 | 100 |
| 2.44 | F | 6 | 49 | 0 | 0 | 0 | 0 | 0 | 0 | 45 | 0 | 0 | 0 | 0 | 100 |
| 1.64 | G | 10 | 25 | 0 | 0 | 0 | 0 | 10 | 0 | 55 | 0 | 0 | 0 | 0 | 100 |
| 6.00 | H | 5 | 10 | 20 | 20 | 20 | 0 | 0 | 0 | 0 | 0 | 0 | 20 | 5 | 100 |
| 1.30 | I | 30 | 10 | 0 | 0 | 10 | 0 | 0 | 27 | 20 | 0 | 3 | 0 | 0 | 100 |
| 1.36 | J | 30 | 10 | 0 | 6 | 5 | 0 | 0 | 26 | 20 | 0 | 3 | 0 | 0 | 100 |
| 9.76 | K | 60 | 10 | 5 | 8 | 0 | 0 | 0 | 0 | 17 | 0 | 0 | 0 | 0 | 100 |
| 1.08 | L | 10 | 25 | 0 | 0 | 0 | 0 | 0 | 0 | 65 | 0 | 0 | 0 | 0 | 100 |

In addition, as shown in FIG. 1, welding was performed on a 20° V-groove with a groove width of 10 mm surrounded by a copper backing 1 (on the back side of the groove) and a sliding copper backing 2 (on the front side of the groove). A water-cooled backing was used as each of the copper backing 1 and the sliding copper backing 2.

welding method: electroslag welding
welding conditions:

plate thickness of base metal: 30 mm
groove shape: see FIG. 1
welding started at slag bath depth of 25 mm
wire: see Tables 2 to 5
wire diameter=1.6 mm
heat input condition: about 12-19 kJ/mm (welding current 340-380 A, welding voltage 40-44 V)
welding posture: vertical one pass

Compositions (with the remainder consisting of inevitable impurities) of weld metals obtained thus are shown in Tables 7 to 10. As for each weld metal shown in Tables 7 to 10, if the weld metal does not contain any of Cu, Cr, Mo, W, Nb, V and B, only a parameter value of the relationship (6) is set out, but the column of a parameter value of the relationship (7) is blank. On the other hand, as for each weld metal containing at least one element selected from the group consisting of Cu, Cr, Mo, W, Nb, V and B, only the parameter value of the relationship (7) is set out, but the column of the parameter value of the relationship (6) is blank. Further, the aforementioned weld metals were evaluated as to the following properties.

(Strength)

A tensile test piece was extracted from a central portion of each weld metal and in parallel with a weld line direction by a method according to JIS Z2202, and a tensile test was performed thereon by a method according to JIS Z2241. In each example, when the weld metal satisfied tensile strength TS>690 MPa, it was evaluated as acceptable.

(Cryogenic Toughness)

A charpy impact test piece (JIS Z3111 No. 4 V-notch test piece) was extracted from a plate-thickness-direction central portion of each obtained weld metal and perpendicularly to a weld line direction, and a charpy impact test at -196°C was performed thereon by a method according to JIS Z2242. Similar tests were performed three times, and an average value thereof was calculated. When the weld metal had an absorbed energy IV of 40 J or more, it was evaluated as excellent in cryogenic toughness.

(Bead Appearance)

Bead appearance was checked visually, and evaluated on the basis of the following criteria.

acceptable: bead with edge uniform and excellent in linearity
rejected: bead meandered largely or with undercut occurring therein

Table 7    Chemical components and mechanical properties of weld metal

| | C | Si | Mn | Ni | Fe | Cu | Cr | Mo | W | Nb | V | B | O | N |
|---|---|---|---|---|---|---|---|---|---|---|---|---|---|---|
| No.1 | 0.049 | 0.19 | 0.49 | 9.3 | 90 | 0 | 0 | 0 | 0 | 0 | 0 | 0 | 0.022 | 0.0041 |
| No.2 | 0.031 | 0.17 | 0.30 | 10.5 | 89 | 0 | 0 | 0 | 0 | 0 | 0 | 0 | 0.013 | 0.0033 |
| No.3 | 0.038 | 0.14 | 0.30 | 8.5 | 91 | 0 | 0 | 0 | 0 | 0 | 0 | 0 | 0.020 | 0.0043 |
| No.4 | 0.047 | 0.07 | 0.38 | 8.6 | 91 | 0 | 0 | 0 | 0 | 0 | 0 | 0 | 0.020 | 0.0035 |
| No.5 | 0.039 | 0.29 | 0.33 | 9.8 | 90 | 0 | 0 | 0 | 0 | 0 | 0 | 0 | 0.021 | 0.0039 |
| No.6 | 0.041 | 0.07 | 0.11 | 9.7 | 90 | 0 | 0 | 0 | 0 | 0 | 0 | 0 | 0.021 | 0.0040 |
| No.7 | 0.039 | 0.23 | 0.34 | 10.6 | 89 | 0 | 0 | 0 | 0 | 0 | 0 | 0 | 0.022 | 0.0035 |
| No.8 | 0.034 | 0.15 | 0.76 | 10.8 | 88 | 0 | 0 | 0 | 0 | 0 | 0 | 0 | 0.023 | 0.0029 |
| No.9 | 0.031 | 0.09 | 0.69 | 7.1 | 92 | 0 | 0 | 0 | 0 | 0 | 0 | 0 | 0.023 | 0.0035 |
| No.10 | 0.033 | 0.12 | 0.31 | 11.8 | 88 | 0 | 0 | 0 | 0 | 0 | 0 | 0 | 0.021 | 0.0036 |
| No.11 | 0.031 | 0.15 | 0.55 | 10.2 | 89 | 0 | 0 | 0 | 0 | 0 | 0 | 0 | 0.020 | 0.0045 |
| No.12 | 0.028 | 0.16 | 0.26 | 9.5 | 90 | 0 | 0 | 0 | 0 | 0 | 0 | 0 | 0.025 | 0.0034 |
| No.13 | 0.038 | 0.24 | 0.55 | 11.5 | 88 | 0 | 0 | 0 | 0 | 0 | 0 | 0 | 0.020 | 0.0039 |
| No.14 | 0.023 | 0.16 | 0.29 | 9.1 | 90 | 0 | 0 | 0 | 0 | 0 | 0 | 0.001 | 0.024 | 0.0033 |
| No.15 | 0.033 | 0.22 | 0.43 | 9.5 | 89 | 0 | 0.22 | 0.23 | 0.23 | 0 | 0 | 0.003 | 0.020 | 0.0033 |
| No.16 | 0.045 | 0.16 | 0.23 | 9.4 | 90 | 0 | 0 | 0.30 | 0 | 0 | 0 | 0 | 0.025 | 0.0031 |
| No.17 | 0.043 | 0.17 | 0.35 | 10.3 | 89 | 0 | 0.31 | 0 | 0 | 0 | 0 | 0 | 0.024 | 0.0045 |

Table 7 continued

| | Base metal | Flux sign | Parameter (6) | Parameter (7) | Tensile strength (MPa) | Absorbed energy (J) |
|---|---|---|---|---|---|---|
| No.1 | 9N | E | 0.235 | | 810 | 56 |
| No.2 | 7N | B | 0.227 | | 823 | 65 |
| No.3 | 5N | E | 0.199 | | 714 | 55 |
| No.4 | 7N | D | 0.212 | | 727 | 59 |
| No.5 | 9N | K | 0.229 | | 828 | 58 |
| No.6 | 9N | K | 0.211 | | 750 | 59 |
| No.7 | 9N | C | 0.240 | | 860 | 57 |
| No.8 | 9N | C | 0.257 | | 889 | 56 |
| No.9 | 9N | E | 0.187 | | 699 | 59 |
| No.10 | 9N | F | 0.249 | | 889 | 58 |
| No.11 | 9N | E | 0.234 | | 828 | 59 |
| No.12 | 9N | E | 0.205 | | 755 | 55 |
| No.13 | 9N | F | 0.265 | | 934 | 55 |
| No.14 | 9N | E | | 0.200 | 727 | 59 |
| No.15 | 9N | F | | 0.269 | 929 | 55 |
| No.16 | 9N | E | | 0.239 | 846 | 55 |
| No.17 | 9N | E | | 0.253 | 911 | 56 |

Table 7 continued

|  | C | Si | Mn | Ni | Fe | Cu | Cr | Mo | W | Nb | V | B | O | N |
|---|---|---|---|---|---|---|---|---|---|---|---|---|---|---|
| No.18 | 0.022 | 0.18 | 0.10 | 10.8 | 89 | 0 | 0 | 0 | 0.32 | 0 | 0 | 0 | 0.020 | 0.0043 |
| No.19 | 0.010 | 0.08 | 0.34 | 10.2 | 89 | 0.29 | 0 | 0 | 0 | 0 | 0 | 0 | 0.020 | 0.0041 |
| No.20 | 0.028 | 0.13 | 0.33 | 10.4 | 89 | 0 | 0 | 0 | 0 | 0 | 0 | 0 | 0.017 | 0.0037 |
| No.21 | 0.050 | 0.12 | 0.25 | 10.7 | 89 | 0 | 0 | 0 | 0 | 0 | 0 | 0 | 0.018 | 0.0037 |
| No.22 | 0.046 | 0.13 | 0.28 | 10.5 | 89 | 0 | 0 | 0 | 0 | 0 | 0 | 0 | 0.007 | 0.0035 |
| No.23 | 0.025 | 0.13 | 0.26 | 10.8 | 89 | 0 | 0 | 0 | 0 | 0 | 0 | 0 | 0.007 | 0.0059 |
| No.24 | 0.045 | 0.22 | 0.25 | 9.9 | 90 | 0 | 0 | 0 | 0 | 0 | 0 | 0 | 0.007 | 0.0031 |
| No.25 | 0.026 | 0.15 | 0.26 | 9.2 | 90 | 0 | 0 | 0 | 0 | 0 | 0 | 0 | 0.009 | 0.0045 |

Table 7 continued

|  | Base metal | Flux sign | Parameter (6) | Parameter (7) | Tensile strength (MPa) | Absorbed energy (J) |
|---|---|---|---|---|---|---|
| No.18 | 9N | F |  | 0.224 | 840 | 58 |
| No.19 | 9N | F |  | 0.214 | 785 | 59 |
| No.20 | 9N | B | 0.222 |  | 806 | 74 |
| No.21 | 9N | I | 0.245 |  | 848 | 72 |
| No.22 | 9N | E | 0.239 |  | 836 | 73 |
| No.23 | 9N | E | 0.222 |  | 816 | 77 |
| No.24 | 9N | G | 0.230 |  | 818 | 78 |
| No.25 | 5N | G | 0.197 |  | 732 | 70 |

Table 8  Chemical components and mechanical properties of weld metal

|  | C | Si | Mn | Ni | Fe | Cu | Cr | Mo | W | Nb | V | B | O | N |
|---|---|---|---|---|---|---|---|---|---|---|---|---|---|---|
| No.26 | 0.032 | 0.16 | 0.31 | 10.9 | 89 | 0 | 0 | 0 | 0 | 0 | 0 | 0 | 0.017 | 0.0043 |
| No.27 | 0.036 | 0.18 | 0.29 | 10.3 | 89 | 0 | 0 | 0 | 0 | 0 | 0 | 0 | 0.006 | 0.0080 |
| No.28 | 0.031 | 0.18 | 0.30 | 10.5 | 89 | 0 | 0 | 0 | 0 | 0 | 0 | 0 | 0.016 | 0.0039 |
| No.29 | 0.032 | 0.18 | 0.35 | 10.8 | 89 | 0 | 0 | 0 | 0 | 0 | 0 | 0 | 0.012 | 0.0037 |
| No.30 | 0.035 | 0.13 | 0.30 | 10.4 | 89 | 0 | 0 | 0 | 0 | 0 | 0 | 0 | 0.009 | 0.0037 |
| No.31 | 0.029 | 0.13 | 0.31 | 9.8 | 90 | 0 | 0 | 0 | 0 | 0 | 0 | 0 | 0.018 | 0.0041 |
| No.32 | 0.027 | 0.14 | 0.30 | 10.6 | 88 | 0 | 0.21 | 0.22 | 0.23 | 0 | 0 | 0.001 | 0.013 | 0.0031 |
| No.33 | 0.024 | 0.08 | 0.32 | 9.6 | 90 | 0 | 0 | 0.09 | 0 | 0 | 0 | 0 | 0.007 | 0.0096 |
| No.34 | 0.024 | 0.12 | 0.30 | 9.7 | 90 | 0 | 0 | 0 | 0.09 | 0 | 0 | 0.004 | 0.009 | 0.0043 |
| No.35 | 0.032 | 0.17 | 0.29 | 8.7 | 91 | 0 | 0 | 0.23 | 0 | 0 | 0 | 0 | 0.010 | 0.0041 |
| No.36 | 0.030 | 0.18 | 0.31 | 10.3 | 89 | 0 | 0.21 | 0 | 0 | 0 | 0 | 0 | 0.019 | 0.0045 |
| No.37 | 0.031 | 0.17 | 0.30 | 11.0 | 88 | 0 | 0.15 | 0 | 0 | 0 | 0 | 0 | 0.007 | 0.0037 |
| No.38 | 0.029 | 0.09 | 0.25 | 9.1 | 90 | 0.11 | 0 | 0 | 0 | 0 | 0 | 0.002 | 0.008 | 0.0055 |

Table 8 continued

|        | Base metal | Flux sign | Parameter (6) | Parameter (7) | Tensile strength (MPa) | Absorbed energy (J) |
|--------|-----------|-----------|---------------|---------------|------------------------|---------------------|
| No.26  | 7N        | I         | 0.235         |               | 846                    | 69                  |
| No.27  | 9N        | H         | 0.228         |               | 821                    | 73                  |
| No.28  | 9N        | J         | 0.227         |               | 825                    | 71                  |
| No.29  | 9N        | E         | 0.236         |               | 849                    | 70                  |
| No.30  | 9N        | B         | 0.228         |               | 814                    | 71                  |
| No.31  | 9N        | I         | 0.212         |               | 771                    | 69                  |
| No.32  | 9N        | B         |               | 0.261         | 943                    | 65                  |
| No.33  | 9N        | H         |               | 0.209         | 763                    | 83                  |
| No.34  | 9N        | J         |               | 0.228         | 765                    | 84                  |
| No.35  | 5N        | E         |               | 0.213         | 777                    | 71                  |
| No.36  | 7N        | I         |               | 0.234         | 864                    | 70                  |
| No.37  | 9N        | E         |               | 0.243         | 887                    | 76                  |
| No.38  | 9N        | E         |               | 0.212         | 729                    | 77                  |

Table 8 continued

|        | C     | Si   | Mn   | Ni   | Fe | Cu | Cr   | Mo   | W    | Nb   | V    | B | O     | N      |
|--------|-------|------|------|------|----|----|------|------|------|------|------|---|-------|--------|
| No.39  | 0.022 | 0.11 | 0.31 | 10.3 | 89 | 0  | 0    | 0    | 0    | 0    | 0    | 0 | 0.015 | 0.0039 |
| No.40  | 0.032 | 0.16 | 0.30 | 10.5 | 89 | 0  | 0.15 | 0    | 0    | 0    | 0    | 0 | 0.017 | 0.0031 |
| No.41  | 0.038 | 0.11 | 0.30 | 10.5 | 89 | 0  | 0    | 0    | 0    | 0    | 0    | 0 | 0.025 | 0.0039 |
| No.42  | 0.032 | 0.13 | 0.29 | 8.1  | 91 | 0  | 0    | 0.02 | 0.05 | 0    | 0    | 0 | 0.025 | 0.0043 |
| No.43  | 0.038 | 0.14 | 0.28 | 8.8  | 91 | 0  | 0    | 0    | 0    | 0    | 0    | 0 | 0.014 | 0.0035 |
| No.44  | 0.030 | 0.10 | 0.27 | 8.9  | 91 | 0  | 0    | 0    | 0    | 0    | 0    | 0 | 0.023 | 0.0039 |
| No.45  | 0.030 | 0.13 | 0.26 | 9.5  | 90 | 0  | 0    | 0    | 0    | 0.02 | 0.02 | 0 | 0.025 | 0.0033 |
| No.46  | 0.026 | 0.16 | 0.32 | 10.0 | 90 | 0  | 0    | 0    | 0    | 0    | 0    | 0 | 0.010 | 0.0035 |
| No.47  | 0.020 | 0.16 | 0.43 | 9.4  | 90 | 0  | 0    | 0    | 0    | 0    | 0    | 0 | 0.021 | 0.0033 |
| No.48  | 0.024 | 0.18 | 0.25 | 9.1  | 90 | 0  | 0    | 0    | 0    | 0    | 0    | 0 | 0.024 | 0.0031 |
| No.49  | 0.050 | 0.29 | 0.60 | 11.3 | 88 | 0  | 0    | 0    | 0    | 0    | 0    | 0 | 0.023 | 0.0033 |
| No.50  | 0.025 | 0.18 | 0.30 | 8.8  | 91 | 0  | 0    | 0    | 0    | 0    | 0.01 | 0 | 0.024 | 0.0043 |

Table 8 continued

|        | Base metal | Flux sign | Parameter (6) | Parameter (7) | Tensile strength (MPa) | Absorbed energy (J) |
|--------|-----------|-----------|---------------|---------------|------------------------|---------------------|
| No.39  | 9N        | H         | 0.213         |               | 783                    | 74                  |
| No.40  | 9N        | H         |               | 0.235         | 858                    | 71                  |
| No.41  | 9N        | L         | 0.232         |               | 819                    | 55                  |
| No.42  | 5N        | K         |               | 0.189         | 695                    | 55                  |
| No.43  | 9N        | J         | 0.203         |               | 729                    | 73                  |
| No.44  | 9N        | I         | 0.195         |               | 711                    | 51                  |
| No.45  | 9N        | A         |               | 0.210         | 763                    | 50                  |
| No.46  | 9N        | E         | 0.214         |               | 786                    | 73                  |
| No.47  | 9N        | E         | 0.204         |               | 754                    | 54                  |
| No.48  | 9N        | F         | 0.194         |               | 729                    | 52                  |
| No.49  | 9N        | B         | 0.278         |               | 959                    | 50                  |
| No.50  | 9N        | E         |               | 0.194         | 722                    | 52                  |

Table 9 Chemical components and mechanical properties of weld metal

|  | C | Si | Mn | Ni | Fe | Cu | Cr | Mo | W | Nb | V | B | O | N |
|---|---|---|---|---|---|---|---|---|---|---|---|---|---|---|
| No.51 | 0.040 | 0.25 | 0.51 | 10.2 | 89 | 0.10 | 0 | 0 | 0.02 | 0.12 | 0.12 | 0 | 0.023 | 0.0041 |
| No.52 | 0.022 | 0.18 | 0.29 | 9.4 | 90 | 0 | 0.02 | 0 | 0 | 0 | 0 | 0 | 0.025 | 0.0044 |
| No.53 | 0.031 | 0.15 | 0.45 | 10.0 | 89 | 0 | 0 | 0 | 0 | 0 | 0 | 0 | 0.019 | 0.0037 |
| No.54 | 0.029 | 0.21 | 0.43 | 9.1 | 90 | 0 | 0 | 0 | 0 | 0 | 0 | 0 | 0.018 | 0.0035 |
| No.55 | 0.033 | 0.20 | 0.38 | 10.3 | 89 | 0 | 0 | 0 | 0 | 0 | 0 | 0 | 0.017 | 0.0041 |
| No.56 | 0.050 | 0.11 | 0.24 | 9.5 | 90 | 0 | 0 | 0 | 0 | 0 | 0 | 0 | 0.016 | 0.0031 |
| No.57 | 0.028 | 0.21 | 0.35 | 10.5 | 89 | 0 | 0 | 0 | 0 | 0 | 0 | 0 | 0.017 | 0.0045 |
| No.58 | 0.023 | 0.11 | 0.34 | 9.6 | 90 | 0 | 0 | 0 | 0 | 0 | 0 | 0 | 0.019 | 0.0054 |
| No.59 | 0.044 | 0.23 | 0.29 | 9.9 | 90 | 0 | 0 | 0 | 0 | 0 | 0 | 0 | 0.013 | 0.0045 |
| No.60 | 0.031 | 0.14 | 0.32 | 10.2 | 89 | 0 | 0.02 | 0 | 0 | 0 | 0 | 0.003 | 0.018 | 0.0037 |
| No.61 | 0.035 | 0.14 | 0.30 | 10.6 | 89 | 0 | 0 | 0 | 0.24 | 0 | 0 | 0 | 0.019 | 0.0033 |
| No.62 | 0.052 | 0.07 | 0.24 | 8.6 | 91 | 0 | 0 | 0 | 0 | 0 | 0 | 0 | 0.021 | 0.0043 |
| No.63 | 0.063 | 0.07 | 0.31 | 10.9 | 89 | 0 | 0 | 0 | 0 | 0 | 0 | 0 | 0.020 | 0.0037 |

Table 9 continued

|  | Base metal | Flux sign | Parameter (6) | Parameter (7) | Tensile strength (MPa) | Absorbed energy (J) |
|---|---|---|---|---|---|---|
| No.51 | 9N | I |  | 0.274 | 847 | 50 |
| No.52 | 9N | K |  | 0.200 | 752 | 50 |
| No.53 | 9N | H | 0.225 |  | 806 | 60 |
| No.54 | 9N | F | 0.209 |  | 764 | 63 |
| No.55 | 9N | E | 0.230 |  | 830 | 61 |
| No.56 | 9N | J | 0.224 |  | 777 | 64 |
| No.57 | 9N | C | 0.228 |  | 832 | 61 |
| No.58 | 9N | B | 0.204 |  | 749 | 62 |
| No.59 | 9N | B | 0.231 |  | 823 | 65 |
| No.60 | 9N | E |  | 0.238 | 807 | 63 |
| No.61 | 9N | E |  | 0.239 | 853 | 61 |
| No.62 | 9N | B | 0.210 |  | 720 | 48 |
| No.63 | 9N | B | 0.263 |  | 876 | 44 |

Table 9 continued

|  | C | Si | Mn | Ni | Fe | Cu | Cr | Mo | W | Nb | V | B | O | N |
|---|---|---|---|---|---|---|---|---|---|---|---|---|---|---|
| No.64 | 0.038 | 0.39 | 0.35 | 10.4 | 89 | 0 | 0 | 0 | 0 | 0 | 0 | 0 | 0.020 | 0.0034 |
| No.65 | 0.041 | 0.20 | 0.84 | 8.3 | 91 | 0 | 0 | 0 | 0 | 0 | 0 | 0 | 0.023 | 0.0040 |
| No.66 | 0.035 | 0.09 | 0.98 | 11.4 | 88 | 0 | 0 | 0 | 0 | 0 | 0 | 0 | 0.025 | 0.0037 |
| No.67 | 0.039 | 0.14 | 0.41 | 7.0 | 92 | 0 | 0 | 0 | 0 | 0 | 0 | 0 | 0.024 | 0.0033 |
| No.68 | 0.025 | 0.16 | 0.33 | 13.8 | 86 | 0 | 0 | 0 | 0 | 0 | 0 | 0 | 0.024 | 0.0035 |
| No.69 | 0.035 | 0.28 | 0.89 | 10.1 | 89 | 0 | 0 | 0 | 0 | 0 | 0 | 0 | 0.022 | 0.0037 |
| No.70 | 0.021 | 0.13 | 0.26 | 9.3 | 90 | 0 | 0 | 0 | 0 | 0 | 0 | 0 | 0.024 | 0.0037 |
| No.71 | 0.048 | 0.23 | 0.71 | 11.5 | 88 | 0 | 0 | 0 | 0 | 0 | 0 | 0 | 0.022 | 0.0035 |
| No.72 | 0.021 | 0.09 | 0.25 | 9.2 | 90 | 0 | 0 | 0 | 0.03 | 0.01 | 0 | 0 | 0.021 | 0.0034 |
| No.73 | 0.035 | 0.24 | 0.53 | 10.9 | 88 | 0.18 | 0 | 0.35 | 0 | 0 | 0 | 0 | 0.022 | 0.0034 |
| No.74 | 0.035 | 0.13 | 0.65 | 10.2 | 89 | 0.17 | 0 | 0 | 0 | 0 | 0 | 0.005 | 0.023 | 0.0034 |
| No.75 | 0.020 | 0.16 | 0.33 | 9.9 | 90 | 0 | 0 | 0 | 0 | 0 | 0 | 0 | 0.020 | 0.0043 |

Table 9 continued

|  | Base metal | Flux sign | Parameter (6) | Parameter (7) | Tensile strength (MPa) | Absorbed energy (J) |
|---|---|---|---|---|---|---|
| No.64 | 9N | H | 0.242 |  | 886 | 43 |
| No.65 | 9N | C | 0.228 |  | 780 | 48 |
| No.66 | 9N | H | 0.277 |  | 934 | 41 |
| No.67 | 9N | H | 0.181 | 0.189 | 708 | 42 |
| No.68 | 9N | H | 0.277 |  | 1000 | 41 |
| No.69 | 9N | K | 0.257 |  | 953 | 42 |
| No.70 | 9N | I | 0.193 |  | 725 | 48 |
| No.71 | 9N | J | 0.283 |  | 965 | 40 |
| No.72 | 9N | H |  | 0.192 | 715 | 49 |
| No.73 | 9N | E |  | 0.284 | 997 | 42 |
| No.74 | 9N | E |  | 0.275 | 860 | 45 |
| No.75 | 9N | D | 0.207 |  | 771 | 48 |

Table 10 Chemical components and mechanical properties of weld metal

|  | C | Si | Mn | Ni | Fe | Cu | Cr | Mo | W | Nb | V | B | O | N |
|---|---|---|---|---|---|---|---|---|---|---|---|---|---|---|
| No.76 | 0.030 | 0.09 | 0.28 | 10.1 | 90 | 0 | 0 | 0 | 0 | 0 | 0 | 0 | 0.020 | 0.0033 |
| No.77 | 0.033 | 0.17 | 0.27 | 9.8 | 90 | 0 | 0 | 0 | 0 | 0 | 0 | 0 | 0.021 | 0.0035 |
| No.78 | 0.044 | 0.17 | 0.50 | 9.2 | 90 | 0 | 0 | 0 | 0 | 0 | 0 | 0 | 0.021 | 0.0037 |
| No.79 | 0.035 | 0.18 | 0.33 | 10.2 | 89 | 0 | 0 | 0 | 0 | 0 | 0 | 0 | 0.022 | 0.0034 |
| No.80 | 0.034 | 0.12 | 0.38 | 10.3 | 89 | 0 | 0 | 0 | 0 | 0 | 0 | 0 | 0.022 | 0.0044 |
| No.81 | 0.049 | 0.17 | 0.51 | 10.1 | 89 | 0 | 0 | 0 | 0 | 0 | 0 | 0 | 0.009 | 0.0057 |
| No.82 | 0.033 | 0.13 | 0.32 | 9.9 | 89 | 0.17 | 0 | 0 | 0 | 0 | 0 | 0 | 0.012 | 0.0033 |
| No.83 | 0.032 | 0.16 | 0.30 | 10.5 | 89 | 0 | 0 | 0 | 0 | 0 | 0 | 0 | 0.025 | 0.0040 |
| No.84 | 0.034 | 0.14 | 0.37 | 10.8 | 89 | 0 | 0.16 | 0 | 0 | 0 | 0 | 0 | 0.025 | 0.0043 |
| No.85 | 0.032 | 0.12 | 0.31 | 10.7 | 89 | 0 | 0 | 0 | 0 | 0 | 0 | 0 | 0.025 | 0.0033 |
| No.86 | 0.033 | 0.11 | 0.33 | 10.5 | 89 | 0 | 0 | 0.07 | 0 | 0 | 0 | 0.001 | 0.025 | 0.0043 |
| No.87 | 0.054 | 0.09 | 0.24 | 7.8 | 92 | 0 | 0 | 0 | 0 | 0 | 0 | 0 | 0.022 | 0.0035 |
| No.88 | 0.029 | 0.08 | 0.46 | 7.7 | 92 | 0 | 0 | 0 | 0 | 0 | 0 | 0 | 0.023 | 0.0029 |

Table 10 continued

|  | Base metal | Flux sign | Parameter (6) | Parameter (7) | Tensile strength (MPa) | Absorbed energy (J) |
|---|---|---|---|---|---|---|
| No.76 | 9N | E | 0.215 |  | 777 | 49 |
| No.77 | 9N | E | 0.216 |  | 783 | 47 |
| No.78 | 9N | H | 0.228 |  | 792 | 46 |
| No.79 | 9N | H | 0.228 |  | 818 | 45 |
| No.80 | 9N | D | 0.229 |  | 813 | 45 |
| No.81 | 9N | E | 0.249 |  | 852 | 42 |
| No.82 | 9N | E |  | 0.227 | 803 | 40 |
| No.83 | 9N | K | 0.227 |  | 822 | 43 |
| No.84 | 9N | K |  | 0.245 | 883 | 40 |
| No.85 | 9N | K | 0.230 |  | 825 | 41 |
| No.86 | 9N | K |  | 0.238 | 832 | 42 |
| No.87 | 9N | E | 0.199 |  | 718 | 43 |
| No.88 | 9N | D | 0.183 |  | 697 | 44 |

Table 10 continued

|  | C | Si | Mn | Ni | Fe | Cu | Cr | Mo | W | Nb | V | B | O | N |
|---|---|---|---|---|---|---|---|---|---|---|---|---|---|---|
| No.89 | 0.031 | 0.16 | 0.44 | 10.4 | 89 | 0 | 0 | 0 | 0 | 0 | 0 | 0 | 0.025 | 0.0033 |
| No.90 | 0.028 | 0.09 | 0.29 | 9.2 | 90 | 0 | 0.17 | 0 | 0 | 0 | 0 | 0 | 0.025 | 0.0038 |
| No.91 | 0.073 | 0.12 | 0.48 | 7.9 | 91 | 0 | 0 | 0 | 0 | 0 | 0 | 0 | 0.023 | 0.0039 |
| No.92 | 0.039 | 0.41 | 0.27 | 11.2 | 88 | 0 | 0 | 0 | 0 | 0 | 0 | 0 | 0.023 | 0.0033 |
| No.93 | 0.042 | 0.12 | 1.03 | 8.2 | 91 | 0 | 0 | 0 | 0 | 0 | 0 | 0 | 0.022 | 0.0038 |
| No.94 | 0.040 | 0.24 | 0.42 | 5.9 | 93 | 0 | 0 | 0 | 0 | 0 | 0 | 0 | 0.021 | 0.0035 |
| No.95 | 0.031 | 0.14 | 0.29 | 14.1 | 85 | 0 | 0 | 0 | 0 | 0 | 0 | 0 | 0.023 | 0.0037 |
| No.96 | 0.046 | 0.16 | 0.60 | 13.4 | 86 | 0 | 0 | 0 | 0 | 0 | 0 | 0 | 0.025 | 0.0033 |
| No.97 | 0.012 | 0.05 | 0.21 | 8.7 | 91 | 0 | 0 | 0 | 0 | 0 | 0 | 0 | 0.022 | 0.0039 |
| No.98 | 0.054 | 0.29 | 0.79 | 11.9 | 87 | 0 | 0 | 0 | 0 | 0 | 0 | 0 | 0.020 | 0.0035 |
| No.99 | 0.010 | 0.05 | 0.21 | 8.7 | 91 | 0 | 0 | 0.03 | 0 | 0 | 0 | 0 | 0.021 | 0.0031 |
| No.100 | 0.044 | 0.27 | 0.54 | 11.1 | 88 | 0.16 | 0.26 | 0 | 0 | 0.08 | 0.08 | 0 | 0.020 | 0.0043 |

Table 10 continued

|  | Base metal | Flux sign | Parameter (6) | Parameter (7) | Tensile strength (MPa) | Absorbed energy (J) |
|---|---|---|---|---|---|---|
| No.89 | 9N | I | 0.232 |  | 830 | 41 |
| No.90 | 9N | I |  | 0.207 | 765 | 43 |
| No.91 | 9N | D | 0.233 |  | 753 | 37 |
| No.92 | 9N | C | 0.253 |  | 929 | 28 |
| No.93 | 9N | B | 0.234 |  | 777 | 32 |
| No.94 | 9N | B | 0.167 |  | 659 | 38 |
| No.95 | 9N | C | 0.285 |  | 1018 | 25 |
| No.96 | 9N | F | 0.305 |  | 1041 | 21 |
| No.97 | 9N | E | 0.169 |  | 680 | 35 |
| No.98 | 9N | H | 0.302 |  | 1011 | 20 |
| No.99 | 9N | K |  | 0.169 | 678 | 36 |
| No.100 | 9N | H |  | 0.302 | 1024 | 21 |

The results in Tables 7 to 10 can lead to the following consideration.

First, No. 1 to No. 90 in Tables 7 to 10 are examples using wires of No. 1 to No. 90 in Tables 2 to 5 satisfying the requirements of the present invention. In each of No. 1 to No. 90, a weld metal excellent in both the cryogenic toughness IV (i.e., absorbed energy) and the strength TS (tensile strength) could be obtained though it was subjected to welding with a high heat input of 10.0 kJ/mm or more.

Of those examples, each example using flux A to L in Table 6 satisfying the composition of the present invention had good bead appearance.

On the other hand, No. 91 to No. 100 in Table 10 are examples using wires of No. 91 to No. 100 in Table 5 not satisfying the requirements of the present invention. The examples had the following defects.

In No. 91, the content of C in the wire and the weld metal was so large that the toughness deteriorated.

In No. 92, the content of Si in the wire and the weld metal was so large that the toughness deteriorated.

In No. 93, the content of Mn in the wire and the weld metal was so large that the toughness deteriorated.

In No. 94, the content of Ni in the wire and the weld metal was so small that the strength was reduced, and the toughness deteriorated.

In No. 95, the content of Ni in the wire and the weld metal was so large that the toughness deteriorated.

In No. 96, the content of Fe in the wire was so small that alloy components were excessive. Thus, the parameter of the relationship (6) in the weld metal was so large that the toughness deteriorated.

In No. 97, the parameter of the relationship (1) in the wire was so small that the strength was reduced, and the toughness deteriorated.

In No. 98, the parameter of the relationship (1) in the wire and the parameter of the relationship (6) in the weld metal were so large that the toughness deteriorated.

In No. 99, the parameter of the relationship (2) in the wire was so small that the strength was reduced, and the toughness deteriorated.

In No. 100, the parameter of the relationship (2) in the wire and the parameter of the relationship (7) in the weld metal were so large that the toughness deteriorated.

Although the present invention has been described in detail based on the aforementioned specific examples, the present invention is not limited to the specific examples.

## Claims

1. An electroslag welding wire containing, by mass% based on total mass of the wire:

    C: more than 0% and 0.07% or less;
    Si: more than 0% and 0.50% or less;
    Mn: more than 0% and 1.0% or less;
    Ni: 6.0 to 15.0%;
    Fe: 79% or more, and
    optionally at least one element selected from the group consisting of Cu, Cr, Mo, W, Nb, V and B,

and satisfying the following relationship (2):

$$0.150 \leq C+Si/30+W/30+Mn/20+Cu/20+Ni/60+Cr/20+Mo/15+Nb/10+V/10+5\times B \leq 0.300 \quad (2),$$

the electroslag welding wire further optionally containing at least one element selected from the group consisting of Ca, Mg, REM, Zr, Al and Ti, and satisfying the following relationship (3):

$$0.001 \leq 1.6(Ca+Mg)+1.25(REM+Zr)+Al+0.8Ti \leq 0.70 \quad (3),$$

and
optionally, when the wire is a flux cored wire, the flux containing:

a metal-based flux satisfying the aforementioned ranges of the composition; and
a slag forming agent in an amount of more than 0% and not more than 15% based on total mass of the wire, wherein the slag forming agent contains at least one selected from the group consisting of $SiO_2$, CaO, $CaF_2$, $BaF_2$, MgO, $Al_2O_3$, MnO, $TiO_2$, $ZrO_2$, FeO, $Na_2O$, $K_2O$, and BaO, and satisfies the following relationship (4):

$$(CaO+CaF_2+BaF_2+MgO+BaO+Na_2O+K_2O)/(SiO_2+0.5(Al_2O_3+TiO_2+ZrO_2+MnO+FeO)) \geq 1.00 \quad (4)$$

wherein the left side is taken as >100 when the slag forming agent does not contain any of $SiO_2$, $Al_2O_3$, $TiO_2$, $ZrO_2$, MnO and FeO,

the remainder of the electroslag welding wire being inevitable impurities.

2. The electroslag welding wire according to Claim 1, wherein the wire is a solid wire or a flux cored wire.

3. The electroslag welding wire according to Claim 1 or 2, wherein the wire has been plated with Cu.

4. Use of a flux additionally put to compensate molten slag which is reduced with the advance of welding during electroslag welding together with the electroslag welding wire according to any one of Claims 1 to 3, the additional flux containing by mass%:

$SiO_2$: 0 to 35%;
CaO: 5 to 60%;
$CaF_2$: 3 to 50%;
$BaF_2$: 0 to 20%;
MgO: 0 to 20%;
$Al_2O_3$: 0 to 65%;
MnO: 0 to 20%;
$TiO_2$: 0 to 10%;
$ZrO_2$: 0 to 10%;
FeO: 0 to 5%;
$Na_2O$: 0 to 10%;
$K_2O$: 0 to 10%;
BaO: 0 to 20%, and
the remainder being inevitable impurities; and
the flux satisfying the following relationship (5):

$$(CaO+CaF_2+BaF_2+MgO+BaO+Na_2O+K_2O)/(SiO_2+0.5(Al_2O_3+TiO_2+ZrO_2+MnO$$

$$+FeO))\geq 1.00 \qquad (5)$$

wherein the left side is taken as >100 when the flux does not contain any of $SiO_2$, $Al_2O_3$, $TiO_2$, $ZrO_2$, $MnO$ and $FeO$.

**5.** A method for producing a weld joint by electroslag welding using the electroslag welding wire according to any one of Claims 1 to 3 and the flux for electroslag welding having the composition defined in Claim 4, and a steel plate containing 5 to 10% of Ni as a base metal,
wherein a weld metal in the weld joint contains, by mass%:

C: more than 0% and 0.07% or less;
Si: more than 0% and 0.50% or less;
Mn: more than 0% and 1.0% or less;
Ni: 6.0 to 15.0%,
optionally at least one element selected from the group consisting of Cu, Cr, Mo, W, Nb, V and B,
optionally O: 0% or more and 0.025% or less; and
optionally N: 0% or more and 0.010% or less,
with the remainder consisting of Fe; Ca, Mg, REM, Al, Zr and Ti partially left behind as slag formed from the slag forming agent; and inevitable impurities, and
wherein the weld metal satisfies the following relationship (7):

$$0.150\leq C+Si/30+W/30+Mn/20+Cu/20+Ni/60+Cr/20+Mo/15+Nb/10+V/10+5\times B\leq 0$$

$$.300 \qquad (7)$$

## Patentansprüche

**1.** Elektroschlackeschweißdraht, der in Masse%, bezogen auf die Gesamtmasse des Drahtes, enthält:

C: mehr als 0% und 0,07% oder weniger;
Si: mehr als 0% und 0,50% oder weniger;
Mn: mehr als 0% und 1,0% oder weniger;
Ni: 6,0 bis 15,0%;
Fe: 79% oder mehr, und
gegebenenfalls mindestens ein Element, ausgewählt aus der Gruppe, bestehend aus Cu, Cr, Mo, W, Nb, V und B,
und die nachstehende Beziehung (2) erfüllt:

$$0,150\leq C+Si/30+W/30+Mn/20+Cu/20+Ni/60+Cr/20+Mo/15+Nb/10+V/10+5\times B\leq 0$$

$$,300 \qquad (2),$$

wobei der Elektroschlackeschweißdraht weiter gegebenenfalls mindestens ein Element, ausgewählt aus der Gruppe, bestehend aus Ca, Mg, REM, Zr, Al und T, enthält und die nachstehende Beziehung (3) erfüllt:

$$0,001\leq 1,6(Ca+Mg)+1,25(REM+Zr)+Al+0,8Ti\leq 0,70 \qquad (3),$$

und
gegebenenfalls, wenn der Draht ein Fülldraht ist, das Flussmittel enthält:

ein Flussmittel auf Metallbasis, das die vorstehenden Bereiche der Zusammensetzung erfüllt; und
ein Schlackenbildungsmittel in einer Menge von mehr als 0% und nicht mehr als 15%, bezogen auf die Gesamtmasse des Drahtes,

wobei das Schlackenbildungsmittel mindestens eines, ausgewählt aus der Gruppe, bestehend aus $SiO_2$, $CaO$, $CaF_2$, $BaF_2$, $MgO$, $Al_2O_3$, $MnO$, $TiO_2$, $ZrO_2$, $FeO$, $Na_2O$, $K_2O$ und $BaO$ enthält, und die nachstehende Beziehung (4) erfüllt:

$$(CaO+CaF_2+BaF_2+MgO+BaO+Na_2O+K_2O)/(SiO_2+0,5(Al_2O_3+TiO_2+ZrO_2+MnO$$
$$+FeO))\geq 1,00 \quad (4)$$

wobei die linke Seite als >100 genommen wird, wenn das Schlackenbildungsmittel kein $SiO_2$, $Al_2O_3$, $TiO_2$, $ZrO_2$, $MnO$ und $FeO$ enthält,

wobei der Rest des Elektroschlackeschweißdrahtes unvermeidbare Verunreinigungen sind.

2. Elektroschlackeschweißdraht nach Anspruch 1, wobei der Draht ein Massivdraht oder ein Fülldraht ist.

3. Elektroschlackeschweißdraht nach Anspruch 1 oder 2, wobei der Draht mit Cu beschichtet worden ist.

4. Verwendung eines zusätzlich eingesetzten Flussmittels zum Ausgleich von Schmelzschlacke, die sich mit dem Schweißfortschritt beim Elektroschlackeschweißen zusammen mit dem Elektroschlackeschweißdraht nach einem der Ansprüche 1 bis 3 verringert, wobei das zusätzliche Flussmittel in Masse% enthält:

$SiO_2$: 0 bis 35%;
$CaO$: 5 bis 60%;
$CaF_2$: 3 bis 50%;
$BaF_2$: 0 bis 20%;
$MgO$: 0 bis 20%;
$Al_2O_3$: 0 bis 65%;
$MnO$: 0 bis 20%;
$TiO_2$: 0 bis 10%;
$ZrO_2$: 0 bis 10%;
$FeO$: 0 bis 5%;
$Na_2O$: 0 bis 10%;
$K_2O$: 0 bis 10%;
$BaO$: 0 bis 20%, und
der Rest unvermeidbare Verunreinigungen sind; und
das Flussmittel die nachstehende Beziehung (5) erfüllt:

$$(CaO+CaF_2+BaF_2+MgO+BaO+Na_2O+K_2O)/(SiO_2+0,5(Al_2O_3+TiO_2+ZrO_2+MnO$$
$$+FeO))\geq 1,00 \quad (5)$$

wobei die linke Seite als >100 genommen wird, wenn das Flussmittel kein $SiO_2$, $Al_2O_3$, $TiO_2$, $ZrO_2$, $MnO$ und $FeO$ enthält.

5. Verfahren zur Herstellung einer Schweißverbindung durch Elektroschlackeschweißen unter Verwendung des Elektroschlackeschweißdrahtes nach einem der Ansprüche 1 bis 3 und des Flussmittels zum Elektroschlackeschweißen mit der Zusammensetzung nach Anspruch 4 und eines Stahlblechs, das 5 bis 10% Ni als ein Basismetall enthält, wobei ein Schweißmetall in der Schweißverbindung in Masse% enthält:

C: mehr als 0% und 0,07% oder weniger;
Si: mehr als 0% und 0,50% oder weniger;
Mn: mehr als 0% und 1,0% oder weniger;
Ni: 6,0 bis 15,0%,
gegebenenfalls mindestens ein Element, ausgewählt aus der Gruppe, bestehend aus Cu, Cr, Mo, W, Nb, V und B,
gegebenenfalls O: 0% oder mehr und 0,025% oder weniger; und
gegebenenfalls N: 0% oder mehr und 0,010% oder weniger,

wobei der Rest aus Fe; Ca, Mg, REM, Al, Zr und Ti, die teilweise als Schlacke, die aus dem Schlackenbildungsmittel gebildet ist, zurückbleiben; und unvermeidbaren Verunreinigungen besteht, und
wobei das Schweißmetall die nachstehende Beziehung (7) erfüllt:

$$0,150 \leq C+Si/30+W/30+Mn/20+Cu/20+Ni/60+Cr/20+Mo/15+Nb/10+V/10+5 \times B \leq 0,300 \quad (7)$$

**Revendications**

1. Fil de soudage sous laitier contenant, en % en masse basé sur la masse totale du fil :

   C : plus de 0 % et 0,07 % ou moins ;
   Si : plus de 0 % et 0,50 % ou moins ;
   Mn : plus de 0 % et 1,0 % ou moins ;
   Ni: 6,0 à 15,0 % ;
   Fe : 79 % ou plus, et
   en option au moins un élément sélectionné parmi le groupe constitué de Cu, Cr, Mo, W, Nb, V et B,
   et satisfaisant la relation suivante (2) :

   $$0,150 \leq C+Si/30+W/30+Mn/20+Cu/20+Ni/60+Cr/20+Mo/15+Nb/10+V/10+5xB \leq 0,300 \quad (2)$$

   le fil de soudage sous laitier contenant en outre en option au moins un élément sélectionné parmi le groupe
   constitué de Ca, Mg, REM, Zr, Al et Ti, et satisfaisant la relation suivante (3) :

   $$0,001 \leq 1,6(Ca+Mg)+1,25(REM+Zr)+Al+0,8Ti \leq 0,70 \quad (3),$$

   et
   en option, lorsque le fil est un fil à flux incorporé, le flux contenant :

   un flux à base de métal satisfaisant les plages susmentionnées de la composition ; et
   un agent de formation de laitier en une quantité de plus de 0 % et pas plus de 15 % basée sur la masse
   totale du fil,
   dans lequel l'agent de formation de laitier contient au moins un élément sélectionné parmi le groupe constitué
   de $SiO_2$, CaO, $CaF_2$, $BaF_2$, MgO, $Al_2O_3$, MnO, $TiO_2$, $ZrO_2$, FeO, $Na_2O$, $K_2O$ et BaO, et satisfait la relation
   suivante (4) :

   $$(CaO+CaF_2+BaF_2+MgO+BaO+Na_2O+K_2O)/(SiO_2+0,5(Al_2O_3+TiO_2+ZrO_2+MnO+FeO)) \geq 1,00 \quad (4)$$

   dans lequel le côté gauche est pris comme >100 lorsque l'agent de formation de laitier ne contient pas l'un
   quelconque de $SiO_2$, $Al_2O_3$, $TiO_2$, $ZrO_2$, MnO et FeO, le reste du fil de soudage sous laitier étant des impuretés
   inévitables.

2. Fil de soudage sous laitier selon la revendication 1, dans lequel le fil est un fil solide ou un fil à flux incorporé.

3. Fil de soudage sous laitier selon la revendication 1 ou 2, dans lequel le fil a été plaqué de Cu.

4. Utilisation d'un flux ajouté pour compenser du laitier fondu qui est réduit avec l'avance du soudage au cours d'un
   soudage sous laitier avec le fil de soudage sous laitier selon l'une quelconque des revendications 1 à 3, le flux supplémentaire contenant en % en masse :

SiO$_2$ : 0 à 35 % ;
CaO : 5 à 60 % ;
CaF$_2$ : 3 à 50 % ;
BaF$_2$ : 0 à 20 % ;
MgO : 0 à 20 % ;
Al$_2$O$_3$ : 0 à 65 % ;
MnO : 0 à 20 % ;
TiO$_2$ : 0 à 10 % ;
ZrO$_2$: 0 à 10 %;
FeO: 0 à 5 % ;
Na$_2$O : 0 à 10 % ;
K$_2$O : 0 à 10 % ;
BaO : 0 à 20 %, et
le reste étant des impuretés inévitables ; et
le flux satisfaisant la relation suivante (5) :

$$(CaO+CaF_2+BaF_2+MgO+BaO+Na_2O+K_2O)/(SiO_2+0,5(Al_2O_3+TiO_2+ZrO_2+MnO+FeO))\geq 1,00 \qquad (5)$$

dans laquelle le côté gauche est pris comme >100 lorsque le flux ne contient pas l'un quelconque de SiO$_2$, Al$_2$O$_3$, TiO$_2$, ZrO$_2$, MnO et FeO.

5. Procédé de production d'un joint soudé par soudage sous laitier utilisant le fil de soudage sous laitier selon l'une quelconque des revendications 1 à 3 et le flux pour soudage sous laitier ayant la composition définie à la revendication 4, et une plaque d'acier contenant 5 à 10 % de Ni en tant que métal de base, dans lequel un métal soudé dans le joint soudé contient, en % en masse :

C : plus de 0 % et 0,07 % ou moins ;
Si : plus de 0 % et 0,50 % ou moins ;
Mn : plus de 0 % et 1,0 % ou moins ;
Ni : 6,0 à 15,0 %,
en option au moins un élément sélectionné parmi le groupe constitué de Cu, Cr, Mo, W, Nb, V et B,
en option O : 0 % ou plus et 0,025 % ou moins ; et
en option N : 0 % ou plus et 0,010 % ou moins,
avec le reste constitué de Fe ; Ca, Mg, REM, Zr, Al et Ti partiellement laissés en tant que laitier formé à partir de l'agent de formation de laitier ; et des impuretés inévitables, et
dans lequel le métal soudé satisfait la relation suivante (7) :

$$0,150\leq C+Si/30+W/30+Mn/20+Cu/20+Ni/60+Cr/20+Mo/15+Nb/10+V/10+5xB \leq 0,300 \qquad (7)$$

# FIG. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11138290 A
- JP 50071529 A
- JP 60111793 A
- JP 55165294 A
- JP 2008183570 A
- JP 2015009247 A
- JP 2016020004 A
- JP 2016093823 A
- JP 5880662 B